# EUROPEAN PATENT APPLICATION

(11) **EP 3 451 426 A1**
(43) Date of publication of application: **06.03.2019**
(21) Application number: 17789670.1
(22) Date of filing: 27.04.2017
(51) Int. Cl.: H01M 4/587, H01G 11/06, H01G 11/50, H01G 11/86, H01G 13/00, H01M 4/38, H01M 4/48, H01M 4/505, H01M 4/525, H01M 4/58

(54) **MANUFACTURING METHODS FOR ELECTRODE MATERIAL, ELECTRODE, BATTERY, AND CAPACITOR, AND MANUFACTURING DEVICE FOR ELECTRODE MATERIAL**

(30) Priority: 28.04.2016 JP 2016091699; 07.06.2016 JP 2016113506; 05.10.2016 JP 2016197430; 10.11.2016 JP 2016219736; 27.12.2016 JP 2016253092
(71) Applicant: JSR Corporation, Tokyo 105-8640 (JP)
(72) Inventor: SUMIYA, Koji, Tokyo 105-8640 (JP); ASANO, Shigehito, Tokyo 105-8640 (JP); KOGA, Yasuyuki, Tokyo 105-8640 (JP); KIMURA, Ryo, Tokyo 105-8640 (JP); REIBA, Tsutomu, Tokyo 105-8640 (JP); KOKUBO, Terukazu, Tokyo 105-8640 (JP); ANDO, Nobuo, Tokyo 105-8640 (JP); HATAZOE, Takumi, Tokyo 105-8640 (JP)
(74) Representative: TBK
(86) International application number: PCT/JP2017/016769
(87) International publication number: WO 2017/188388

(57) **Abstract**

A manufacturing method for an electrode material, the manufacturing method including, in a presence of an alkali metal supplying source and a solvent, dynamically pressurizing an amorphous aggregate including at least an active material in a dynamic pressurizer, sending out in a sending direction, and continuously discharging the aggregate in the sending direction from the dynamic pressurizer.

## Description

### CROSS-REFERENCE TO RELATED APPLICATION

The present international application claims the benefit of Japanese Patent Application No. 2016-91699 filed on April 28, 2016 with the Japan Patent Office, Japanese Patent Application No. 2016-113506 filed on June 7, 2016 with the Japan Patent Office, Japanese Patent Application No. 2016-197430 filed on October 5, 2016 with the Japan Patent Office, Japanese Patent Application No. 2016-219736 filed on November 10, 2016 with the Japan Patent Office, and Japanese Patent Application No. 2016-253092 filed on December 27, 2016 with the Japan Patent Office, and the entire disclosure of Japanese Patent Application No. 2016-91699, Japanese Patent Application No. 2016-113506, Japanese Patent Application No. 2016-197430, Japanese Patent Application No. 2016-219736, and Japanese Patent Application No. 2016-253092 is incorporated herein by reference.

### TECHNICAL FIELD

The present disclosure relates to manufacturing methods for an electrode material, an electrode, a battery, and a capacitor, and a manufacturing device for an electrode material.

### BACKGROUND ART

In recent years, miniaturization and lighter weight of electronic equipment are dramatic, and accompanying therewith, demands for miniaturization and lighter weight are also further increasing with respect to a battery used as a driving power supply of such electronic equipment.

In order to satisfy the demands of miniaturization and lighter weight, a non-aqueous electrolyte rechargeable battery represented by a lithium ion rechargeable battery is being developed. Furthermore, a lithium ion capacitor is known as a power accumulating device corresponding to applications that require high energy density property and high output property. Furthermore, a sodium ion-type battery and capacitor using sodium that is of lower cost and more abundant in terms of resources than lithium are also known.

In such battery or capacitor, a process of doping an alkali metal to an electrode active material in advance (generally called a pre-doping) is being adopted for various purposes. For example, in the lithium ion capacitor, the pre-doping of lithium is carried out for the purpose of lowering a negative electrode potential and increasing an energy density. In this case, a method for carrying out the pre-doping on the negative electrode active material in a cell using a power collecting body including a through-hole is the mainstream (see e.g., Patent Document 1).

In the lithium ion rechargeable battery, the pre-doping is carried out for the purpose of reducing the irreversible capacity of the negative electrode. In this case, a method for carrying out the pre-doping on the negative electrode active material before assembling the battery is adopted other than the method described above (see e.g., Patent Documents 2 and 3). Furthermore, in producing a sodium ion-type power accumulating device, a method for pre-doping sodium to the negative electrode before assembling the power accumulating device is adopted (Patent Document 4).

Moreover, Patent Document 5 proposes to bring a fibrous carbon material used as a negative electrode into contact with n-butyllithium in a non-aqueous solvent to occlude the lithium ion in the fibrous carbon material to suppress decomposition of the electrolytic solution on the negative electrode at the time of an initial charging of the rechargeable battery.

However, the conventional methods mentioned above have problems in being provided for practical use in terms of manufacturing cost and convenience. Moreover, in the conventional methods described above, the pre-dope is carried out with respect to an article molded to a state of an electrode (i.e., active material layer formed on a power collecting body). In this case, an insulative binder is partially bound to an active material particle, and thus the pre-doping is not uniformly advanced, and unevenness may also occur in a so-called SEI (solid electrolyte interface) coated film.

In Patent Document 6, meanwhile, a method for kneading and mixing the lithium-dopable material and the lithium metal with a ball in the presence of a solvent, and carrying out the pre-doping using collision and friction with the ball is proposed as a method for uniformly and easily pre-doping the lithium ion in a short time.

Furthermore, Patent Document 7 discloses a method for stirring, kneading or the like the mixture of the active material and the lithium metal in a specific solvent to bring the active material and the lithium metal into collision as a method for manufacturing an active material excelling in doping efficiency.

In the methods proposed in Patent Documents 6 and 7, the insulative binder, and the like are not used, and thus the pre-doping can be uniformly advanced.

### PRIOR ART DOCUMENTS

### PATENT DOCUMENTS

Patent Document 1: Japanese Unexamined Patent Application Publication No. 2007-67105
Patent Document 2: Japanese Unexamined Patent Application Publication No. H07-235330
Patent Document 3: Japanese Unexamined Patent Application Publication No. H09-293499
Patent Document 4: Japanese Unexamined Patent Application Publication No. 2012-69894
Patent Document 5: Japanese Unexamined Patent Application Publication No. 2000-156222
Patent Document 6: Japanese Unexamined Patent Application Publication No. 2012-204306
Patent Document 7: Japanese Unexamined Patent Application Publication No. 2012-209195

### SUMMARY OF THE INVENTION

### PROBLEMS TO BE SOLVED BY THE INVENTION

However, it is difficult to efficiently manufacture a high-quality electrode material with the methods proposed in Patent Documents 6 and 7.

One aspect of the present disclosure preferably provides a manufacturing method for an electrode material capable of efficiently manufacturing a high-quality electrode material pre-doped with alkali metal, manufacturing methods for an electrode, a battery, and a capacitor, as well as a manufacturing device for the electrode material.

### MEANS FOR SOLVING THE PROBLEMS

One aspect of the present disclosure relates to a manufacturing method for an electrode material, the manufacturing method including, in a presence of an alkali metal supplying source and a solvent, dynamically pressurizing an amorphous aggregate including at least an active material in a dynamic pressurizer, sending out in a sending direction, and continuously discharging the aggregate in the sending direction from the dynamic pressurizer. According to the manufacturing method for the electrode material of one aspect of the present disclosure, a high-quality electrode material can be efficiently manufactured.

Another aspect of the present disclosure relates to a manufacturing device for an electrode material, the manufacturing device including: (A) a dynamic pressurizer; and (B) a discharger, where the dynamic pressurizer is configured to accommodate, dynamically pressurize, and send out in a sending direction toward the discharger an alkali metal supplying source, a solvent, and an amorphous aggregate including at least an active material, and the discharger is configured to continuously discharge the aggregate in the sending direction from the dynamic pressurizer. The manufacturing method for the electrode material described above can be easily performed by using the manufacturing device for the electrode material of another aspect of the present disclosure.

Another aspect of the present disclosure relates to a manufacturing method for an electrode material including an active material doped with alkali metal, the manufacturing method including: a separating process of separating the active material and an alkali metal supplying source in a mixed solution including the active material doped with the alkali metal and the alkali metal supplying source. According to the manufacturing method for the electrode material of another aspect of the present disclosure, the alkali metal supplying source remaining in the active material included in the electrode material can be reduced.

Another aspect of the present disclosure relates to a manufacturing device for an electrode material, the manufacturing device including: an accommodation container that accommodates a mixed solution including an active material and an alkali metal supplying source; and a remover that removes either the active material or the alkali metal supplying source from the mixed solution. According to the manufacturing device for the electrode material of another aspect of the present disclosure, the alkali metal supplying source remaining in the active material included in the electrode material to manufacture can be reduced, and heat generation and the like of when used as an electrode can be suppressed.

Another aspect of the present disclosure relates to a manufacturing method for an electrode material, the manufacturing method including: a doping process of kneading, stirring, or mixing an electrode material precursor including at least an active material in a container in a presence of an alkali metal supplying source, a conductive bead, and a solvent. According to the manufacturing method for the electrode material of another aspect of the present disclosure, a high-quality electrode material pre-doped with alkali metal can be efficiently manufactured.

Another aspect of the present disclosure relates to a manufacturing device for an electrode material including: (A) a container that accommodates an electrode material precursor including at least an active material, an alkali metal supplying source, a solvent, and a conductive bead; and (B) a dynamic pressurizer that kneads, stirs, or mixes the electrode material precursor. According to the manufacturing device for the electrode material of another aspect of the present disclosure, a high-quality electrode material pre-doped with alkali metal can be efficiently manufactured.

Another aspect of the present disclosure relates to a manufacturing method for an electrode material, the manufacturing method including: a doping process of kneading, stirring, or mixing a mixed solution including at least an active material in a presence of an alkali metal supplying source; where, in the doping process, the alkali metal supplying source and the active material are in a separated state. According to the manufacturing method for the electrode material of another aspect of the present disclosure, as the alkali metal supplying source and the active material are in a separated state in the doping process, the alkali metal can be suppressed from remaining in the active material after the doping process, and heat generation and the like of when used as an electrode can be suppressed.

Another aspect of the present disclosure relates to a manufacturing device for an electrode material, the manufacturing device including: (A) a container that accommodates a mixed solution including at least an active material and an alkali metal supplying source while separating through the separator; and (B) a dynamic pressurizer that kneads, stirs, or mixes the mixed solution. The manufacturing method for the electrode material described above can be easily performed by using the manufacturing device for the electrode material of another aspect of the present disclosure. Thus, the alkali metal can be suppressed from remaining in the active material included in the manufactured electrode material, the heat generation and the like of when used as an electrode can be suppressed, and an irreversible capacity of when used as a battery electrode can be reduced.

Another aspect of the present disclosure relates to a manufacturing method for an electrode material, the manufacturing method including: a depressurizing process of placing a mixed solution including at least an active material in a depressurized state; and a doping process of doping an alkali metal to the active material. According to the manufacturing method for the electrode material of another aspect of the present disclosure, the SEI coated film in the active material can be suppressed from becoming excessively thick, the heat generation and the like of when used as an electrode can be suppressed, and an irreversible capacity of when used as a battery electrode can be reduced.

Another aspect of the present disclosure relates to a manufacturing device for an electrode material, the manufacturing device including: (A) a container that accommodates a mixed solution including at least an active material and an alkali metal supplying source; and (B) a depressurizing part that depressurizes an inside of the container. The manufacturing method for the electrode material described above can be easily performed by using the manufacturing device for the electrode material of another aspect of the present disclosure. As a result, the SEI coated film in the active material can be suppressed from becoming excessively thick, the heat generation and the like of when used as an electrode can be suppressed, and an irreversible capacity of when used as a battery electrode can be reduced.

Another aspect of the present disclosure relates to a manufacturing method for an electrode of manufacturing the electrode material through any of the manufacturing methods for the electrode material described above, and manufacturing an electrode using the electrode material. According to the manufacturing method for the electrode of another aspect of the present disclosure, any of the effects described above can be obtained.

Another aspect of the present disclosure relates to a manufacturing method for a capacitor including a positive electrode, a negative electrode, and an electrolyte, where the negative electrode is manufactured through the manufacturing method for the electrode described above. According to the manufacturing method for the capacitor of another aspect of the present disclosure, any of the effects described above can be obtained.

Another aspect of the present disclosure relates to a manufacturing method for a battery including a positive electrode, a negative electrode, and an electrolyte, where the negative electrode is manufactured through the manufacturing method for the electrode described above. According to the manufacturing method for the battery of another aspect of the present disclosure, any of the effects described above can be obtained.

### BRIEF DESCRIPTION OF THE DRAWINGS

Fig. 1 is an explanatory view showing a configuration of a manufacturing device for an electrode material.
Fig. 2 is an explanatory view showing a configuration of the manufacturing device for the electrode material.
Fig. 3 is an explanatory view showing a configuration of the manufacturing device for the electrode material.
Figs. 4A and 4B are explanatory views showing a manufacturing method for the electrode material.
Fig. 5 is an explanatory view showing a configuration of the manufacturing device.
Fig. 6 is an explanatory view showing a configuration of the manufacturing device.
Fig. 7 is an explanatory view showing a configuration of the manufacturing device.
Fig. 8 is a cross-sectional view showing a configuration of a bead mill corresponding to the manufacturing device for the electrode material.
Fig. 9 is a side view showing a configuration of a container and a pot mill rotating table.
Fig. 10 is a front view showing a configuration of the container and the pot mill rotating table.
Fig. 11 is an explanatory view showing a configuration of a bipolar cell and a pushing device.
Fig. 12 is a side view showing a configuration of a container and a digital shaker.
Fig. 13 is a front view showing a configuration of the container and the digital shaker.
Fig. 14 is a front view showing a configuration of the manufacturing device.
Fig. 15 is a cross-sectional view showing a configuration of the manufacturing device.
Fig. 16 is a cross-sectional view taken along a cross-section XVI-XVI in Fig. 14.
Fig. 17 is a cross-sectional view taken along a cross-section XVII-XVII in Fig. 14.
Fig. 18 is a front view showing a configuration of the manufacturing device.
Fig. 19 is a cross-sectional view showing a configuration of the manufacturing device.
Fig. 20 is a cross-sectional view showing a configuration of an alkali metal supplier.
Fig. 21 is a front view showing a configuration of the manufacturing device.
Fig. 22 is a cross-sectional view showing a configuration of the manufacturing device.
Fig. 23 is an explanatory view showing a configuration of the manufacturing device.
Fig. 24 is a graph showing a temporal change of OCV with elapse of stirring time.

### EXPLANATION OF REFERENCE NUMERALS

1, 101, 201...manufacturing device, 3...cylinder, 5, 105, 106...screw, 7...driving part, 9...nozzle portion, 11...supply port, 13...spiral-shaped protrusion, 15...slurry, 16...stirring blade, 17...container , 19...aggregate, 21...active material particle, 23...alkali metal supplying source particle, 25...electrolytic solution, 103...barrel, 107, 108...output shaft, 109...gearbox, 111...motor, 113, 114...insertion hole, 115...ejection port, 117...supply port, 119...temperature controller, 203, 204...roll, 205...feeder hopper, 207...pressure applying part, 209...main body, 211...feeder screw, 213...inlet, 215...outlet, 217...pump, 219...accumulator, 221...hydraulic cylinder, 401, 501, 601...manufacturing device, 403...accommodation container, 405...suction nozzle, 407...filter, 409...first piping, 411...second piping, 413...stirring wing, 415...mixed solution, 417...alkali metal supplying source, 419...active material, 421...valve, 423...main body tank, 425...overflow collecting tank, 701...bead mill, 703...vessel, 705...rotor, 707...drive shaft, 709...kneading chamber, 711...supply port, 713...ejection port, 715...bead separating portion, 717...opening, 721...container, 723...lithium supplying source, 725...pot mill rotating table, 727...roller, 729...graphitic powder, 731...stainless sphere, 733...glass separator, 735...layer of electrode material, 737...lithium metal, 739...bipolar cell, 741...pushing device, 743...spring, 749...digital shaker, 801, 901, 1001...manufacturing device, 803, 903...container part, 805...stirrer, 807, 907...container, 809, 909...alkali metal supplier, 811, 813...end face, 815, 817...hole, 819...supporting portion, 821...base material, 823...conductive layer, 827...alkali metal supplying source layer, 829, 851...separator, 831...base portion, 833, 835...rotation shaft, 837...top plate, 839...mixed solution, 841, 941...conductive material, 843...active material, 845...electrolytic solution, 847...conductive layer, 849...alkali metal supplying source layer, 853, 855...mesh layer, 1101...manufacturing device, 1103...main body, 1103A...upper side overhanging portion, 1103B...lower side overhanging portion, 1105...hood, 1105A...lower end, 1107...depressurizing part, 1109...container, 1109A...upper end, 1111...supporting table, 1113...blade, 1115...diaphragm pump, 1117...vacuum plumbing, 1119...vacuum gauge, 1121...handle

### MODE FOR CARRYING OUT THE INVENTION

Embodiments of the present disclosure will now be described.

### <First Embodiment>

### 1. Manufacturing method for electrode material

A manufacturing method for an electrode material of the present disclosure includes, in a presence of an alkali metal supplying source and a solvent, dynamically pressurizing an amorphous aggregate including at least an active material in a dynamic pressurizer and sending out in a sending direction, and continuously discharging the aggregate in the sending direction from the dynamic pressurizer.

When referring to in the presence of the alkali metal supplying source in the present embodiment, this includes a case in which the alkali metal supplying source is present other than in the aggregate, a case in which the alkali metal supplying source is present in the aggregate, and a case in which the alkali metal supplying source is present other than in the aggregate and also present in the aggregate.

An alkali metal in the alkali metal supplying source includes, for example, lithium, sodium, and the like. The form of the alkali metal supplying source is not particularly limited, and for example, an alkali metal plate, an alloy plate of alkali metal, and the like may be adopted for the alkali metal supplying source. The alkali metal supplying source may be arranged on a conductive base material. The conductive base material may be porous. Copper, stainless steel, nickel, and the like, for example, can be used for the material of the conductive base material.

Furthermore, the form of the alkali metal supplying source may be a particle state (e.g., alkali metal particles, alloy particles of alkali metal), foil state, wire state, alkali metal piece, and alloy piece of alkali metal (hereinafter referred to as particle etc. form).

The alkali metal supplying source in a particle etc. form can be made to be part of the amorphous aggregate including at least the active material. In this case, the alkali metal supplying source in the particle etc. form is preferably made into small pieces or atomized to increase the doping speed. When the alkali metal supplying source in a foil state is used, the thickness thereof is preferably within a range of 10 to 500 µm, and when the alkali metal supplying source in a particle state is used, the average particle diameter thereof is preferably within a range of 10 to 500 µm.

The solvent is not particularly limited, and merely needs to be a solvent having alkali metal ion conductivity, but is preferably an organic solvent and in particular, preferably an aprotic organic solvent. The aprotic organic solvent includes, for example, ethylene carbonate, propylene carbonate, butylene carbonate, dimethyl carbonate, diethyl carbonate, methyl ethyl carbonate, γ-butyrolactone, acetonitrile, dimethoxyethane, tetrahydrofuran, dioxolan, methylene chloride, sulfolane, and the like. The organic solvent may consist of a single component, or may be a mixed solvent consisting of two or more types of components.

The alkali metal salt is preferably dissolved in the solvent. The alkali metal salt includes, for example, lithium salt, sodium salt, or the like.

An anionic part configuring the alkali metal salt includes, for example, phosphorous anion including fluoro groups such as PF₆⁻, PF₃(C₂F₅)₃⁻, PF₃(CF₃)₃⁻ and the like; boron anion including fluoro group or cyano group such as BF₄⁻, BF₂(CF)₂⁻, BF₃(CF₃)⁻, B(CN)₄⁻ and the like; sulfonyl imide anion including fluoro groups such as N(FSO₂)₂⁻, N(CF₃SO₂)₂⁻, N(C₂F₅SO₂)₂⁻ and the like ; and organic sulfone acid including fluoro groups such as CF₃SO₃⁻ and the like. A single alkali metal salt may be dissolved or two or more types of alkali metal salt may be dissolved in the solvent.

The concentration of the alkali metal ion (alkali metal salt) in the solution (hereinafter referred to as electrolytic solution) in which the alkali metal salt is dissolved in the solvent is preferably greater than or equal to 0.1 mol/L, and more preferably within a range of 0.5 to 1.5 mol/L. Within such range, the doping of the alkali metal with respect to the active material can be efficiently advanced.

In the present disclosure, the dope of alkali metal (hereinafter also simply referred to as dope) is a collective term for a state in which the alkali metal is occluded, intercalated, inserted, carried, and alloyed in various types of states of metal, ion, compound, and the like.

An additive such as vinylene carbonate, vinyl ethylene carbonate, 1-fluoroethylene carbonate, 1-(trifluoromethyl) ethylene carbonate, succinic anhydride, maleic anhydride, propanesultone, diethyl sulfone, and the like may be further dissolved in the solvent.

The solvent may be stationary with respect to the aggregate, or the solvent may be steadily flowing. For example, the flow of solvent may pass through the aggregate (e.g., aggregate of powder). In this case, the solvent may be flowed in a circulating manner in a closed system. Furthermore, the solvent may be part of the amorphous aggregate including the active material. Such form of aggregate may be, for example, a slurry or a cake including the solvent.

When referring to pressurizing the amorphous aggregate in the presence of the alkali metal supplying source and the solvent in the present embodiment, this means that (1) the alkali metal originating from the alkali metal supplying source and the active material included in the aggregate are in an electrically connected state, (2) the solvent and the active material in the aggregate are in a contacting state, and (3) the alkali metal supplying source and the solvent are in a contacting state.

An example of (1) includes a case in which the alkali metal supplying source and the active material included in the aggregate are in direct contact with each other, a case in which a conductive body is present between the alkali metal supplying source and the active material included in the aggregate, and the like.

The aggregate includes at least the active material. The active material is not particularly limited as long as it is an electrode active material that can be applied to a power accumulating device using insertion/desorption of alkali metal ions, and it may be a negative electrode active material or may be a positive electrode active material.

The negative electrode active material is not particularly limited, but includes, for example, a carbon material such as graphite, graphitizable carbon, flame graphitizable carbon, complex carbon material in which graphite particles are coated by a carbide of pitch and resin; a material including a metal or a half-metal, or an oxide thereof such as Si, Sn and the like that can be alloyed with lithium, and the like. A specific example of the carbon material includes the carbon material described in Japanese Unexamined Patent Publication No. 2013-258392. A specific example of the material including a metal or a half-metal, or an oxide thereof that can be alloyed with lithium includes a material described in Japanese Unexamined Patent Publication No. 2005-123175 and Japanese Unexamined Patent Publication No. 2006-107795.

The positive electrode active material includes, for example, a transition metal oxide such as manganese oxide and vanadium oxide, a sulfur system active material such as a simple body of sulfur, metal sulfide, and the like. Furthermore, according to the manufacturing method for the electrode material of the present disclosure, the lithium deficiency of the alkali metal transition metal complex oxide such as lithium cobalt oxide, lithium nickel oxide, lithium manganese oxide, sodium cobalt oxide, sodium nickel oxide, sodium manganese oxide, and the like, which are positive electrode active materials, can be compensated.

Both the positive electrode active material and the negative electrode active material may be formed by a single substance or may be formed by mixing two or more types of substances. The manufacturing method for the electrode material of the present disclosure is suited when the alkali metal is doped to the negative active material, and in particular, further suited when the negative electrode active material is a carbon material or a material including Si or an oxide thereof.

Generally, when the carbon material is used for the active material, the power accumulating device having a low internal resistance is obtained as the particle diameter of the carbon material becomes smaller, but the irreversible capacity becomes larger, and the amount of gas generated when the power accumulating device is held in a charged state becomes large. Such problem can be suppressed even when the carbon material having a 50% volume cumulative diameter D50 of 0.1 to 50 µm is used for the active material by using the manufacturing method for the electrode of the present disclosure. The 50% volume cumulative diameter D50 is a value measured by laser diffraction/scattering method.

Furthermore, the irreversible capacity generally tends to become larger even when the material including Si or the oxide thereof is used for the active material. Such problem can be suppressed by using the manufacturing method for the electrode of the present disclosure.

The aggregate may be a mixture including other components in addition to the active material. Other components include, for example, the alkali metal supplying source, the solvent, the conductive auxiliary agent, and the like. The conductive auxiliary agent includes, for example, carbon black, vapor grown carbon fiber, metal powder other than alkali metal, and the like. The doping speed can be increased by including the conductive auxiliary agent in the aggregate. When the active material is the carbon material, the content proportion of the active material in the aggregate is preferably greater than or equal to 90% by mass with respect to all the components excluding the alkali metal supplying source and the solvent. When the active material is the material including the Si or the oxide thereof, the content proportion of the active material in the aggregate is preferably greater than or equal to 50% by mass with respect to all the components excluding the alkali metal supplying source and the solvent. The content proportion of the binder in the aggregate is usually smaller than or equal to 5% by mass with respect to the active material, and more preferably smaller than or equal to 1% by mass, and still more preferably, the binder is not included in the aggregate.

The form of the aggregate is amorphous. Amorphous means that the shape of the entire aggregate can be changed. The amorphous aggregate including the active material is not molded to a state of the electrode. The manufacturing method for the electrode material of the present disclosure differs from the methods disclosed in Patent Documents 1 to 5 in that the amorphous aggregate including the active material is at least used.

The amorphous aggregate includes, for example, powder body (powder and granular body), slurry, cake, and the like. The aggregate, which is a powder, may be formed from the active material particles, or may include particles of other components in addition to the active material particles. The particles of other components include, for example, alkali metal supplying source particles, particles of the conductive auxiliary agent, and the like.

The dynamic pressurizer is not particularly limited as long as the aggregate can be dynamically pressurized. A mode of dynamically pressurizing is, for example, a mode of pressurizing while carrying out the processes of kneading, stirring, mixing and the like (hereinafter also referred to as kneading, etc.), and a mode of carrying out the processes of kneading, etc. and carrying out the processes of kneading, etc. so that the aggregate is in the pressurized state.

The pressurization means applying a pressure greater than a normal pressure. As the contact resistance between the active material particles can be lowered by pressurizing the amorphous aggregate including the active material, the alkali metal can be rapidly and uniformly doped to the entire active material included in the aggregate.

The dynamic pressurizer may, for example, have bumps on a surface to be brought into contact with the aggregate. If the dynamic pressurizer has bumps, the alkali metal can be uniformly and efficiently doped to the aggregate. The mode of bumps includes, for example, zigzag shape, and the like.

The pressure in pressurization is preferably within a range of 0.001 to 20 MPa. If the pressure is within such range, the balance of the contact resistance between the active material particles and the diffusion of the alkali metal is satisfactory, and the doping of the alkali metal with respect to the active material can be efficiently advanced.

The pressurization time can be appropriately set according to the type of active material, the amount of aggregate, the shape of the container and the dynamic pressurizer, the doping amount of alkali metal, and the like.

When the aggregate is pressurized, it is required that the alkali metal supplying source and the active material included in the aggregate are in the electrically connected state. When the aggregate includes the active material and the alkali metal supplying source, the alkali metal supplying source and the active material are brought into direct contact in a pressurizing process, so that the active material and the alkali metal supplying source are in the electrically connected state.

When referring to continuously discharging, this means that the pressurization of the aggregate in the dynamic pressurizer and the discharge of the aggregate from the dynamic pressurizer are carried out in parallel. The supply of aggregate to the dynamic pressurizer may be continuously carried out or may be carried out in a batch form (batch wise manner). The high-quality electrode material can be efficiently obtained by continuously discharging.

The mode of contact of the solvent and the active material may include bringing the solvent and the active material into contact before the start of pressurization, and may include bringing the solvent and the active material into contact after the start of pressurization. The former case is superior in that the solvent can easily impregnate through the entire aggregate. The latter case is superior in that the aggregate is less likely to diffuse. More specifically, the mode of contact of the solvent and the active material is preferably the following methods.
- Mode of producing the amorphous aggregate (e.g., slurry, cake, etc.) including the alkali metal supplying source, the solvent, and the active material, and pressurizing the produced aggregate.
- Mode of producing the amorphous aggregate (e.g., slurry, cake, etc.) including the solvent and the active material, and pressurizing the produced aggregate and the alkali metal supplying source in an electrically contacted state.
- Mode of bringing at least one part of the amorphous aggregate and the solvent into contact before the start of pressurization on the alkali metal supplying source and the amorphous aggregate including the active material, and additionally introducing the solvent after the start of pressurization.
- Mode of bringing at least one part of the aggregate and the alkali metal into contact before the start of pressurization on the amorphous aggregate including the active material, and additionally introducing the solvent after the start of pressurization to bring the solvent and the alkali metal supplying source into contact.
- Mode of bringing the solvent and the alkali metal supplying source into contact before the start of pressurization on the amorphous aggregate including the active material, and bringing the solvent and the aggregate into contact after the start of pressurization.
- Mode of bringing the solvent and the aggregate into contact after the start of pressurization on the aggregate including the alkali metal supplying source and the active material.
- Mode of bringing the solvent into contact with both the aggregate and the alkali metal supplying source after the start of pressurization on the amorphous aggregate including the active material.

The magnitude of the pressure of when the aggregate is pressurized may always be constant, or it may be changed with elapse of time. A specific mode of when the pressure is changed with elapse of time includes, for example, a mode of increasing the pressure as the time elapses, a mode of reducing the pressure as the time elapses, a mode of increasing/reducing the pressure periodically, and the like.

When the aggregate is pressurized, the temperature of the solvent and the aggregate is preferably within a range of 20 to 100 °C. If the temperature is within such range, the safety is ensured, and the doping of the alkali metal with respect to the active material can be efficiently advanced. When the temperature becomes higher, the doping speed also tends to increase, and thus the pressurization is preferably carried out with the temperature of the solvent and the aggregate at higher than or equal to 30°C when it is desired to increase the doping speed. The environment in which the pressurization is carried out is also preferably within the above temperature range.

The processes such as kneading, etc. are preferably carried out with respect to the aggregate in the presence of the alkali metal supplying source and the solvent before the above pressurization. The heat generation, and the like at the time of pressurization can be suppressed, and the doping of the alkali metal to the active material included in the aggregate can be stably advanced by carrying out the processes such as kneading, etc. before the above pressurization.

For example, the alkali metal supplying source, the solvent, and the aggregate are added to a container, and the processes such as kneading etc. are carried out in the container. Accompanying the processes such as kneading, the doping of the alkali metal to the active material included in the aggregate advances, and the amount of alkali metal supplying source reduces. The container for carrying out the processes such as kneading, etc. may be part of the dynamic pressurizer or may be a container separate from the dynamic pressurizer.

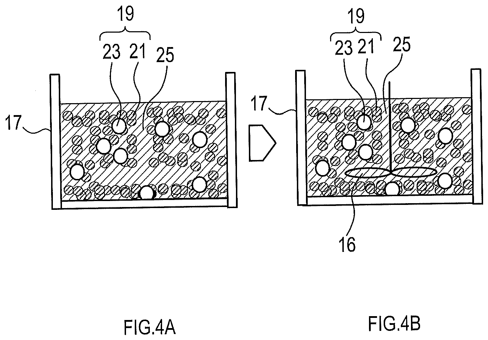

The method for stirring the aggregate before the pressurization includes the following methods. First, as shown in Fig. 4A, active material particles 21, alkali metal supplying source particles 23, and an electrolytic solution 25 are added to a container 17. The active material particles 21 and the alkali metal supplying source particles 23 configure an aggregate 19. The aggregate 19 is a powder, and is amorphous.

Next, as shown in Fig. 4B, the aggregate 19 and the electrolytic solution 25 are stirred to uniformly disperse the active material particles 21 and the alkali metal supplying source particles 23 in the electrolytic solution 25. The stirring method can be appropriately selected from the known methods, and for example, a method for rotating a stirring blade 16 in the electrolytic solution 25 can be used, as shown in Fig. 4B.

After the processes of kneading, etc. were carried out, the aggregate is pressurized in the dynamic pressurizer in the presence of the alkali metal supplying source and the solvent.

### 2. Electrode and manufacturing method for the same

The electrode may be a positive electrode or a negative electrode, but the negative electrode is preferred as the manufacturing method for the electrode material of the present disclosure is suited for when the alkali metal is doped to the negative electrode active material. The electrode may include, for example, a power collecting body and an electrode material layer arranged on a surface of the aggregate. The electrode material layer includes an electrode material (active material doped with alkali metal) manufactured through the manufacturing method described in the section "manufacturing method for electrode material" in the present embodiment.

In manufacturing the negative electrode, for example, a metal foil such as copper, nickel, stainless steel, and the like is preferable for the power collecting body. Furthermore, the power collecting body may be formed with a conductive layer having a carbon material as a main component on the metal foil. The thickness of the power collecting body can be, for example, 5 to 50 µm.

The electrode material layer can include, for example, a binder, an organic solvent, and the like in addition to the electrode material. The binder includes, for example, a rubber binder such as styrene butadiene rubber (SBR), NBR and the like, a fluorine resin such as polytetrafluoroethylene, polyvinylidene fluoride, and the like, a polypropylene, polyethylene, a fluorine modified (meta) acryl binder as disclosed in Japanese Unexamined Patent Publication No. 2009-246137, and the like. An organic solvent similar to the organic solvent described in the section "manufacturing method for electrode material" in the present embodiment can be used for the organic solvent.

The thickness of the electrode material layer is not particularly limited, but is, for example, 5 to 500 µm, preferably 10 to 200 µm, and more preferably 10 to 100 µm.

The electrode material layer can be produced by, for example, preparing a slurry containing the electrode material, the binder, the organic solvent, and the like, and applying and drying the slurry on the power collecting body.

The slurry may include other components in addition to the electrode material, the binder, and the organic solvent. Other components include, for example, a conductive agent such as carbon black, graphite, vapor grown carbon fiber, metal powder; a thickening agent such as carboxymethyl cellulose, Na salt or ammonium salt thereof, methyl cellulose, hydroxymethyl cellulose, ethyl cellulose, hydroxypropyl cellulose, polyvinyl alcohol, oxidized starch, phosphorylated starch, casein, and the like.

Furthermore, as disclosed in Japanese Unexamined Patent Publication No. 2004-281162, and the like, an electrode containing a gel electrolyte can be obtained by using a gelatinizing agent as the binder and adding the electrolyte to the slurry.

The electrode of the present disclosure has a small irreversible capacity. Furthermore, in the battery or the capacitor including the electrode of the present disclosure, the decomposition of the electrolytic solution on the electrode is suppressed.

### 3. Capacitor and manufacturing method for the same

The capacitor includes the positive electrode, the negative electrode, and the electrolyte, where the negative electrode is as described in the section "electrode and manufacturing method for the same" in the present embodiment. The capacitor is not particularly limited as long as it is a capacitor that uses insertion/desorption of the alkali metal ion, and for example, includes a lithium ion capacitor, a sodium ion capacitor, and the like. Among them, the lithium ion capacitor is preferable.

A basic configuration of the positive electrode configuring the capacitor is similar to the configuration of the electrode described in the section "electrode and manufacturing method for the same" in the present embodiment, but an active carbon is preferably used for the positive electrode active material.

The form of the electrolyte is usually in a liquid form, and that similar to the electrolytic solution described in the section "manufacturing method for electrode material" in the present embodiment can be used. The electrolyte may have a gel-like or solid-like form for the purpose of preventing liquid leakage.

The capacitor can include a separator between the positive electrode and the negative electrode for suppressing the physical contact of the positive electrode and the negative electrode. The separator includes, for example, unwoven cloth or porous film having cellulose rayon, polyethylene, polypropylene, polyamide, polyester, polyimide, and the like as a raw material.

A structure of the capacitor includes, for example, a stacked-type cell in which a plate-shaped configuring unit including the positive electrode, the negative electrode, and the separator interposed therebetween is stacked by three or more units to form a stacked body, and the stacked body is sealed in an exterior film.

A structure of the capacitor includes, for example, a winding-type cell in which a band-shaped configuring unit including the positive electrode, the negative electrode, and the separator interposed therebetween is wound to form a stacked body, and the stacked body is accommodated in a square or a cylindrical container.

In the capacitor of the present disclosure including the electrode of the present disclosure as the negative electrode, the decomposition of the electrolytic solution on the negative electrode is suppressed, and thus the amount of gas generated when held in the charged state is small.

### 4. Battery and manufacturing method for the same

The battery of the present disclosure includes the positive electrode, the negative electrode, and the electrolyte, where the negative electrode is as described in the section "electrode and manufacturing method for the same" in the present embodiment. The battery is not particularly limited as long as it is a battery that uses insertion/desorption of the alkali metal ions, and the battery may be a non-rechargeable battery or a rechargeable battery. The battery includes, for example, lithium ion rechargeable battery, sodium ion rechargeable battery, air battery, and the like. Among them, the lithium ion rechargeable battery is preferable.

A basic configuration of the positive electrode configuring the battery of the present disclosure is similar to the configuration of the electrode described in the section "electrode and manufacturing method for the same" in the present embodiment, but other than those already described, organic active material such as nitroxyl radical compound, and the like and oxygen can be used for the positive electrode active material.

The configuration of the electrolyte configuring the battery of the present disclosure and the configuration of the battery itself are similar to those described in "capacitor and manufacturing method for the same" in the present embodiment.

The battery of the present disclosure includes a negative electrode of small irreversible capacity, and thus has high energy density and also excels in cycle property.

### 5. Manufacturing device for electrode material

A manufacturing device for the electrode material of the present disclosure is a manufacturing device for an electrode material that includes (A) a dynamic pressurizer and (B) a discharger, the dynamic pressurizer being configured to accommodate, dynamically pressurize, and send out in a sending direction toward the discharger an alkali metal supplying source, a solvent, and an amorphous aggregate including at least an active material, and the discharger being configured to continuously discharge the aggregate toward the sending direction from the dynamic pressurizer.

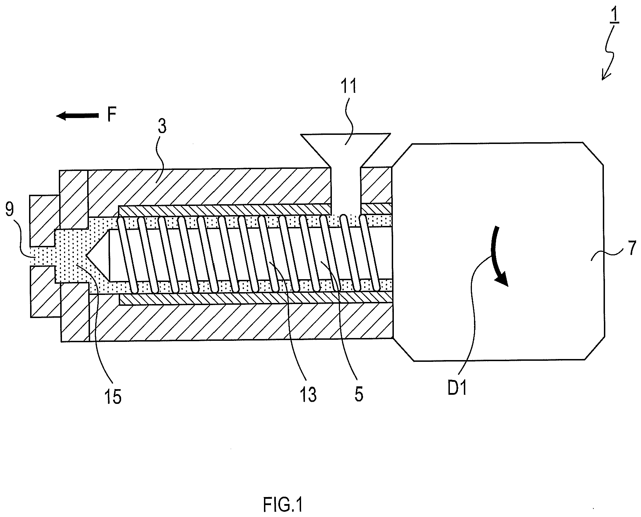

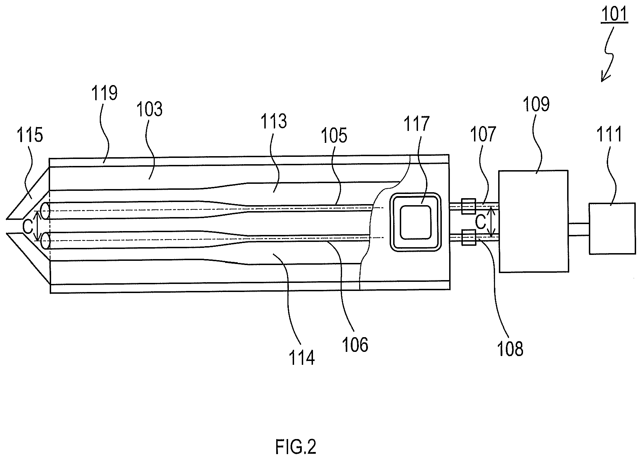

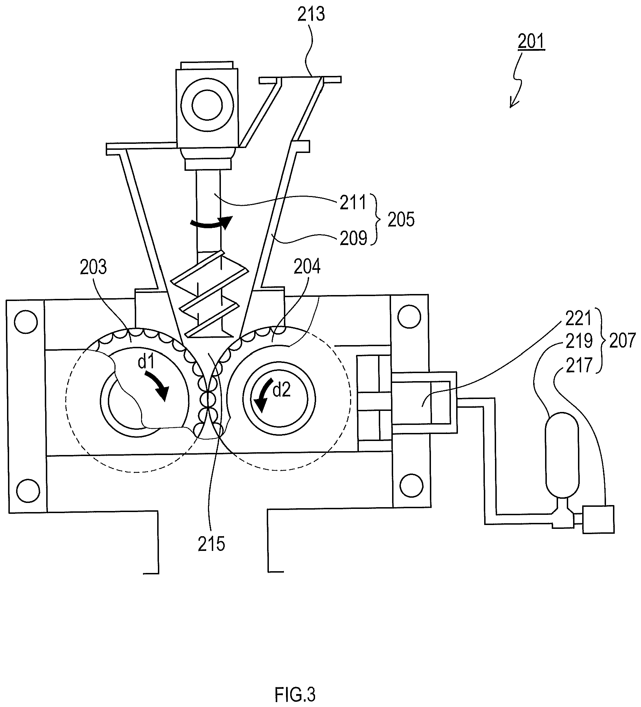

The container of the dynamic pressurizer is not particularly limited as long as it can accommodate the alkali metal supplying source, the solvent, and the amorphous aggregate including at least the active material. The container includes, for example, a cylinder 3 shown in Fig. 1, a barrel 103 shown in Fig. 2, a feed hopper 205, and the like shown in Fig. 3. The container is preferably a conductive body. When the container is a conductive body, the alkali metal supplying source and the aggregate can be short circuited by way of the container.

Furthermore, the dynamic pressurizer includes, for example, a combination of the cylinder 3 and a screw 5 shown in Fig. 1, a combination of the barrel 103 and screws 105, 106 shown in Fig. 2, a combination of the feeder hopper 205 and a feeder screw 211 shown in Fig. 3.

The sending direction is a direction from the right toward the left in the example shown in Figs. 1 and 2. In the example shown in Fig. 3, the sending direction is a direction from the top toward the bottom.

Moreover, the discharger includes for example, a nozzle 9 shown in Fig. 1, an ejection port 115 shown in Fig. 2, an outlet 215 shown in Fig. 3, a die 307 shown in Fig. 4, and the like.

The manufacturing device for the present disclosure may include a kneading device, a stirring device, a mixing device and the like for kneading, etc. substances in the container. Furthermore, the manufacturing device for the present disclosure may include a mechanism that controls the temperature in the container, a mechanism that controls the pressure in the container, a mechanism that controls an atmosphere gas in the container, and the like, as necessary.

### 6. Examples

Hereinafter, the embodiment of the present disclosure will be described more specifically using examples. However, the present disclosure is not limited to the following examples.

### (Example 1A)

### (1) Configuration of manufacturing device 1 of electrode material

A configuration of the manufacturing device 1 of the electrode material will be described based on Fig. 1. The manufacturing device 1 includes the cylinder 3, the screw 5, and a driving part 7. The cylinder 3 includes a reduced diameter nozzle portion 9 at one end. Furthermore, the cylinder 3 is connected to the driving part 7 at an end on an opposite side of the nozzle portion 9. The cylinder 3 further includes a supply port 11 on a side surface. The supply port 11 has a function of supplying a raw material to the inside of the cylinder 3.

The screw 5 is inserted to the inside of the cylinder 3. An axial direction of the screw 5 and an axial direction of the cylinder 3 are parallel. The screw 5 is connected to the driving part 7 at a root thereof. Furthermore, a distal end of the screw 5 faces the nozzle portion 9. The screw 5 includes a spiral-shaped protrusion 13 on an outer peripheral surface thereof.

The driving part 7 includes a motor (not shown), and it can rotate the screw 5 in a forward direction D1 or an opposite direction. When the screw 5 rotates in the forward direction D1, the flow toward the nozzle portion 9 is generated in the raw material in the cylinder 3. Furthermore, the driving part 7 can move the screw 5 backward in a direction F toward the nozzle portion 9 or an opposite direction thereof. The manufacturing device 1 corresponds to the dynamic pressurizer and the discharger.

The cylinder 3 can also include a temperature controller for controlling the temperature inside the cylinder 3. The temperature controller is not particularly limited, but preferably includes a cooling mechanism to suppress heat generation.

### (2) Manufacturing method for electrode material

The slurry 15 is continuously supplied from the supply port 11 while the screw 5 is rotating in the forward direction D1. The slurry 15 includes the active material, the alkali metal particle, and the solvent, and corresponds to the aggregate.

The supplied slurry 15 is dynamically pressurized by the rotation of the screw 5 in the inside of the cylinder 3. The screw 5 is relatively moved with respect to the surface of the cylinder 3. The mode of such movement is rotation. The spiral-shaped protrusion 13 of the screw 5 is proximate to the surface of the cylinder 3. The slurry 15 is dynamically pressurized by repeating being relatively moved and held between the spiral-shaped protrusion 13 and the cylinder 3, which are brought proximate, and separated therefrom.

The screw 5 sends out the slurry 15 in the direction of the nozzle portion 9 while dynamically pressurizing the slurry 15. The slurry 15 is continuously discharged from the nozzle portion 9. Thus, the screw 5 dynamically pressurizes the slurry 15, and also discharges the slurry 15 from the nozzle portion 9 located in the sending direction of the screw 5. The discharged slurry 15 is such that the alkali metal is doped in the active material, and corresponds to the electrode material. According to the method for manufacturing the present example, the high-quality electrode material can be efficiently manufactured.

### (Example 1B)

### (1) Configuration of manufacturing device 101 of electrode material

A configuration of the manufacturing device 101 of the electrode material will be described based on Fig. 2. The manufacturing device 101 is a biaxial extruder. The manufacturing device 101 includes the barrel 103, two screws 105, 106, two output shafts 107, 108, a gearbox 109, and a motor 111.

Two insertion holes 113, 114, to which the screws 105, 106 can be inserted, are arranged in the inside of the barrel 103. The insertion holes 113, 114 are holes provided in the longitudinal direction of the barrel 103. The insertion holes 113, 114 are communicated so as to overlap each other at part in the peripheral direction thereof.

A reduced diameter ejection port 115 is provided at one end of the barrel 103. The ejection port 115 is communicated with the insertion holes 113, 114. A supply port 117 is formed on the side surface of the barrel 103. The supply port 117 has a function of supplying the raw material to the insertion holes 113, 114. The barrel 103 includes a temperature controller 119 for controlling the temperature of the barrel 103 on the outer peripheral surface. The temperature controller 119 is not particularly limited, but preferably cools the barrel 103 to suppress heat generation.

The screws 105, 106 are respectively inserted to the insertion holes 113, 114. The screws 105, 106 each include a spiral-shaped protrusion on an outer peripheral surface thereof. The spiral-shaped protrusions of the screws 105, 106 are meshed with each other at a portion where the insertion holes 113, 114 overlap each other.

The output shafts 107, 108 are respectively coupled to the screws 105, 106. The output shafts 107, 108 have a constant inter-shaft distance C, and are parallel to each other. The output shafts 107, 108 rotate in the same direction.

The gearbox 109 transmits the rotation force of the motor 111 to the output shafts 107, 108. The screws 105, 106 are coupled to the output shafts 107, 108, and thus rotate in the same direction by the rotation force of the motor 111. The rotating direction of the screws 105, 106 is a direction of sending the raw material to the ejection port 115.

The manufacturing device 101 may include a vent port for discharging volatile components generated from the raw material at between the ejection port 115 and the supply port 117. Furthermore, the manufacturing device 101 may include an air removing mechanism for discharging the air contained in the raw material. Moreover, the manufacturing device 101 may include a kneading disc at between the screws 105, 106. The manufacturing device 101 corresponds to the dynamic pressurizer and the discharger.

### (2) Manufacturing method for electrode material

The slurry is continuously supplied from the supply port 117 while the screws 105, 106 are rotating. The slurry includes the active material, the alkali metal particles, and the solvent, and corresponds to the aggregate.

The supplied slurry is dynamically pressurized by the rotation of the screws 105, 106 in the inside of the insertion holes 113, 114.

The screws 105, 106 relatively move by rotating. Furthermore, the screws 105, 106 are meshed with each other. The slurry is dynamically pressurized by repeating being relatively moved and held between the screws 105, 106 meshed with each other, and separated therefrom.

The screws 105, 106 send out the slurry in the direction of the ejection port 115 while dynamically pressurizing the slurry. Furthermore, the slurry is continuously discharged from the ejection port 115. Thus, the screws 105, 106 dynamically pressurize the slurry, and also discharge the slurry from the ejection port 115 located in the sending direction of the screws 105, 106. The discharged slurry is such that the alkali metal is doped in the active material, and it corresponds to the electrode material. According to the method for manufacturing the present example, the high-quality electrode material can be efficiently manufactured.

### (Example 1C)

### (1) Configuration of manufacturing device 201 of electrode material

A configuration of the manufacturing device 201 of the electrode material will be described based on Fig. 3. The manufacturing device 201 includes two rolls 203, 204, a feeder hopper 205, and a hydraulic power package 207.

The rolls 203, 204 are arranged to face each other. The axial directions of the rolls 203, 204 are parallel. The rolls 203, 204 rotate in d1, d2 directions, respectively, by the driving force of the driving source (not shown).

The feeder hopper 205 is located on the upper side of the rolls 203, 204. The feeder hopper 205 includes a funnel-shaped main body 209, and a feeder screw 211. The main body 209 includes an inlet 213 at the upper end, and an outlet 215 at the lower end. The outlet 215 is located on the upper side of a portion where the rolls 203, 204 face.

The feeder screw 211 is inserted to the inside of the main body 209 from the upper side. The feeder screw 211 includes a spiral-shaped protrusion on an outer peripheral surface thereof. The feeder screw 211 rotates in a constant rotating direction. The rotating direction is a rotating direction of sending the raw material in the main body 209 toward the outlet 215.

The hydraulic power package 207 includes a pump 217, an accumulator 219, and a hydraulic cylinder 221. The pump 217 and the accumulator 219 drive the hydraulic cylinder 221, and they push the roll 204 in the direction of the roll 203. As a result, the pressure applied on the raw material passing between the rolls 203, 204 increases. The manufacturing device 201 includes a pressure meter that detects the pressure applied on the raw material by the rolls 203, 204, and may include a mechanism for adjusting the pressure to a constant. The manufacturing device 201 corresponds to the dynamic pressurizer and the discharger.

### (2) Manufacturing method for electrode material

The slurry is continuously supplied from the inlet 213 while the feeder screw 211 is rotating and the rolls 203, 204 are rotating. The slurry includes the active material, the alkali metal particles, and the solvent, and corresponds to the aggregate.

The supplied slurry is temporarily accumulated in the main body 209. The feeder screw 211 stirs, and dynamically pressurizes the slurry accumulated in the main body 209. The stirred slurry is then sent out toward the outlet 215. Thus, the feeder screw 211 discharges the slurry in the sending direction of the feeder screw 211 while dynamically pressurizing the slurry. The main body 209 can also include a temperature controller for controlling the temperature in the main body 209. The temperature controller is not particularly limited, but preferably includes a cooling mechanism to suppress heat generation.

The slurry accumulated in the main body 209 is continuously supplied to between the rolls 203, 204 from the outlet 215.

The rolls 203, 204 hold the slurry to dynamically pressurize the slurry. That is, since the rolls 203, 204 are respectively rotating, the surface of the roll 203 and the surface of the roll 204 are moving relatively. Furthermore, the surface of the roll 203 and the surface of the roll 204 are proximate or brought into contact with each other. The slurry is dynamically pressurized by being held between the surface of the roll 203 and the surface of the roll 204, which are moving relatively and are proximate or brought into contact with each other, and then separated.

The slurry that passed between the rolls 203, 204 is continuously discharged toward the lower side. Thus, the rolls 203, 204 dynamically pressurize the slurry, and discharge the slurry in the sending direction of the rolls 203, 204. The discharged slurry is such that the alkali metal is doped in the active material, and it corresponds to the electrode material. According to the method for manufacturing the present example, the high-quality electrode material can be efficiently manufactured.

### 7. Experiment result

Hereinafter, the example of the present disclosure will be described more specifically by showing experiment results. However, the present disclosure is not limited to the following experiment results.

### (Preparation of slurry)

Active material of 1.8 kg in which carbon is coated by 5 wt% on silicon oxide having an average particle diameter of 5 µm expressed as SiOx (x=1.02), 0.77 kg of electrolytic solution, and 0.223 kg of lithium metal piece were mixed to prepare the slurry. The electrolytic solution includes LiPF6 of concentration 1M. The solvent of the electrolytic solution includes EC (Ethylene Carbonate) and PC (Propylene carbonate) such that a volume ratio is 5:5. The lithium metal piece was obtained by cutting the Li metal foil having a thickness of 100 µm so that each lithium metal piece became about 4 cm³. The lithium metal pieces were arranged so as to be even as much as possible in the slurry. The lithium metal piece corresponds to the alkali metal supplying source. The slurry was kneaded and mixed with HIVIS MIX (manufactured by PRIMIX Corporation) until the lithium metal piece became smaller than or equal to 1 mm². The kneading and mixing were carried out while maintaining a depressurized state after the pressure was depressurized to 2.0 kPa.

### (First experiment result)

The slurry obtained above was added to the main body 209, the rolls 203, 204 having a diameter of 8 inches were rotated at 20 rpm, and the slurry was dynamically pressurized. The gap between the rolls was set to 1 mm. When the lithium piece is present in the discharged slurry, the discharged slurry is again added to the main body 209, and again dynamically pressurized through operations same as above, which were repeated until the lithium piece disappeared.

Part of the slurry doped with lithium was separated and taken out from the mixed solution being stirred, and the OCV was measured. The measuring method is as described below. First, two perforated copper foils of 16 mmcp were prepared through the punching method. Next, the two perforated copper foils were overlapped, and ultrasonically welded excluding an opening of one area in the outer peripheral portion to manufacture a bag.

Slurry of 30 mg was added to such bag, and the opening of the bag was ultrasonically welded to form an evaluation electrode. A tripolar cell having the evaluation electrode as a working electrode and the lithium metal as a counter electrode and a reference electrode was assembled. The electrolytic solution of the same composition as the electrolytic solution described above was injected to the tripolar cell. The potential (OCV) of the working electrode with respect to the lithium metal immediately after the injection was then measured.

The value of OCV of the slurry was 0.31 V, and the doping of lithium was urged. Furthermore, the slurry doped with lithium was observed using an optical microscope at a magnification of 500 times, and remaining lithium metal piece was not found.

### (First reference experiment result)

The electrolytic solution same as that used in the first experiment result was added to the slurry similar to the slurry added to the main body 209 in the first experiment result to obtain a fluid state, and then added to Philmix (manufactured by PRIMIX Corporation: 40-L). The mixture was then kneaded and mixed until the lithium piece disappeared at a peripheral speed of 32m/s while the kneading and mixing chamber was cooled to 15°C. The OCV was measured in the first reference experiment result as with the first experiment result. The value of OCV was 0.62V.

### <Second Embodiment

### 1. Manufacturing method for electrode material

The manufacturing method for the electrode material of the present disclosure includes a doping process of kneading, stirring, or mixing an electrode material precursor including at least the active material in a container in the presence of the alkali metal supplying source, the conductive bead, and the solvent.

An alkali metal in the alkali metal supplying source includes, for example, lithium, sodium, and the like. The form of alkali metal supplying source is not particularly limited, and for example, may be the form described in the first embodiment.

The alkali metal supplying source in the particle etc. form can coexist with the electrode material precursor. In this case, the alkali metal supplying source in the particle etc. form is preferably made into small pieces or atomized to increase the doping speed. When the alkali metal supplying source in a foil state is used, the thickness thereof is preferably within a range of 10 to 1,000 µm, and when the alkali metal supplying source in a particle state is used, the average particle diameter thereof is preferably within a range of 10 to 1,000 µm. The total amount of alkali metal supplying source can be appropriately set according to the amount of alkali metal to dope and the amount of active material, and it is usually an amount corresponding to 5 mAh to 5000 mAh/g with respect to 1 g of active material.

The alkali metal supplying source may, for example, be coated with a coating material. A method for coating the alkali metal supplying source with the coating material includes a method for wrapping the alkali metal supplying source with a separator, a metal mesh, and the like. The separator and the metal mesh correspond to the coating material. The material of the separator is not particularly limited, but is preferably a polyolefin material such as polyethylene, polypropylene, and the like. Stainless steel is usually used for the material of the metal mesh. The film thickness of the coating material is preferably in a range of 1 µm to 1 mm, and it is more preferably in a range of 5 µm to 500 µm. When the film thickness of the coating material is within such range, this excels in the separation of the alkali metal supplying source and the active material, and in the doping speed of the alkali metal to the active material.

The alkali metal supplying source may, for example, be fixed to the container. A method for fixing the alkali metal supplying source to the container includes, for example, a method for fixing to an inner wall of the container with a metal frame, and the like.

The material of the conductive bead may be, for example, metal such as stainless steel, nickel, aluminum, iron, copper, tin cobalt iron, and the like, and a bead coated with such metal, but the hardness and the density of the material are preferably high as the conductive bead is used in the stirring process, and thus stainless steel is suitably used in particular. A method for coating such metal on the bead includes, for example, a method of vapor deposition and plating.

The shape of the conductive bead is preferably spherical. When the shape is spherical, this excels in the easiness in stirring in the stirring process and the durability. An area equivalent circle diameter (Heywood diameter) of the conductive bead is preferably greater than or equal to 0.01 mm and smaller than or equal to 10 mm. When the area equivalent circle diameter of the conductive bead is within such range, this excels in ensuring conduction between the active materials and pressurizing the active material to promote the doping of the alkali metal. The area equivalent circle diameter of the conductive bead can be measured by analyzing the image observed using a microscope.

The lower limit of the mass of the conductive bead is preferably greater than or equal to 10 pts. mass, more preferably greater than or equal to 100 pts. mass, and still more preferably greater than or equal to 500 pts. mass with respect to 100 pts. mass of the electrode material precursor. The upper limit of the mass of the conductive bead is preferably smaller than or equal to 100,000 pts. mass, more preferably smaller than or equal to 50,000 pts. mass, and still more preferably smaller than or equal to 10,000 pts. mass with respect to 100 pts. mass of the electrode material precursor. When the mass of the conductive bead is within such range, this excels in promoting the doping of the alkali metal. Use of the conductive bead enables to further promote the doping of the alkali metal compared to use of other beads. As a result, the high-quality electrode material can be more efficiently manufactured.

The solvent is not particularly limited, and merely needs to be a solvent having alkali metal ion conductivity, but is preferably an organic solvent and in particular, preferably an aprotic organic solvent. The aprotic organic solvent includes, for example, that described in the first embodiment. The organic solvent may consist of a single component, or may be a mixed solvent consisting of two or more types of components.

The alkali metal salt is preferably dissolved in the solvent. The alkali metal salt includes, for example, lithium salt, sodium salt, or the like.

The anionic part configuring the alkali metal salt includes, for example, that described in the first embodiment. A single alkali metal salt may be dissolved or two or more types of alkali metal salt may be dissolved in the solvent.

The concentration of the alkali metal ion (alkali metal salt) in the solution (hereinafter referred to as electrolytic solution) in which the alkali metal salt is dissolved in the solvent is preferably greater than or equal to 0.1 mol/L, and more preferably within a range of 0.5 to 1.5 mol/L. Within such range, the doping of the alkali metal with respect to the active material can be efficiently advanced.

An additive such as vinylene carbonate, vinyl ethylene carbonate, 1-fluoroethylene carbonate, 1-(trifluoromethyl) ethylene carbonate, succinic anhydride, maleic anhydride, propanesultone, diethyl sulfone, and the like may be further dissolved in the solvent.

When referring to in the presence of the alkali metal supplying source, the conductive bead, and the solvent in the present embodiment, this means that (1) the alkali metal originating from the alkali metal supplying source and the active material included in the electrode material precursor are in an electrically connected state, (2) the solvent and the active material in the electrode material precursor are in a contacting state, (3) the alkali metal supplying source and the solvent are in a contacting state, and (4) the conductive bead and the active material in the electrode material precursor are in the contacting state.

An example of (1) includes a case in which the alkali metal supplying source and the active material included in the electrode material precursor are in a direct contact with each other, a case in which a conductive body is present between the alkali metal supplying source and the active material included in the electrode material precursor, and the like.

The above-described (1) includes a case in which the alkali metal supplying source is present other than in the electrode material precursor, a case in which the alkali metal supplying source is present in the electrode material precursor, and a case in which the alkali metal supplying source is present other than in the electrode material precursor and also present in the electrode material precursor.

The electrode material precursor includes at least the active material. The active material is not particularly limited as long as it is an electrode active material that can be applied to a power accumulating device using insertion/desorption of alkali metal ions, and it may be a negative electrode active material or may be a positive electrode active material. The content proportion of the active material is 5 % by mass to 95 % by mass, more preferably 10 % by mass to 90 % by mass, and still more preferably 20 % by mass to 85 % by mass with respect to the total amount of the active material and the solvent, and when the content proportion is within such range, this excels in the promotion of the doping speed and the easiness of the kneading.

The negative electrode active material is not particularly limited, and includes, for example, that described in the first embodiment. The positive electrode active material includes, for example, that described in the first embodiment. Both the positive electrode active material and the negative electrode active material may be formed by a single substance or may be formed by mixing two or more types of substances. The manufacturing method for the electrode material of the present disclosure is suited when the alkali metal is doped to the negative active material, and in particular, further suited when the negative electrode active material is a carbon material or a material including Si or an oxide thereof.

Generally, when the carbon material is used for the active material, the power accumulating device having a low internal resistance is obtained as the particle diameter of the carbon material becomes smaller, but the irreversible capacity becomes larger, and the amount of gas generated when the power accumulating device is held in a charged state becomes large. Such problem can be suppressed even when the carbon material having a 50% volume cumulative diameter D50 of 0.1 to 10 µm is used for the active material by using the manufacturing method for the electrode of the present disclosure. The 50% volume cumulative diameter D50 is a value measured by laser diffraction/scattering method.

Furthermore, the irreversible capacity generally tends to become larger also when the material including Si or the oxide thereof is used for the active material. Such problem can be suppressed by using the manufacturing method for the electrode of the present disclosure.

The electrode material precursor may be a mixture including other components in addition to the active material. Other components include, for example, a conductive auxiliary agent, a binder, and the like. The conductive auxiliary agent includes, for example, carbon black, vapor grown carbon fiber, metal powder other than alkali metal, and the like. The doping speed can be increased by including the conductive auxiliary agent in the electrode material precursor. When the active material is the carbon material, the content proportion of the active material in the electrode material precursor is preferably greater than or equal to 90% by mass with respect to all the components of the electrode material precursor. When the active material is a material including the Si or the oxide thereof, the content proportion of the active material in the electrode material precursor is preferably greater than or equal to 50% by mass with respect to all the components of the electrode material precursor. The content proportion of the binder in the electrode material precursor is usually smaller than or equal to 5% by mass with respect to the active material, and more preferably smaller than or equal to 1% by mass, and still more preferably, the binder is not included in the electrode material precursor.

The form of the electrode material precursor is, for example, an amorphous aggregate. The amorphous aggregate means that the shape of the entire electrode material precursor can be changed. The electrode material precursor which is the amorphous aggregate is, for example, not molded to a state of the electrode.

The electrode material precursor which is the amorphous aggregate includes, for example, powder body (powder and granular body), slurry, cake, and the like. The electrode material precursor, which is the powder body, may be formed from the active material particles, or may include particles of other components in addition to the active material particles. The particles of other components include, for example, conductive auxiliary agent particles, and the like.

With respect to the mode of the kneading process, the solvent and the electrode material precursor may be brought into contact before the start of the kneading process, or the solvent and the electrode material precursor may be brought into contact after the start of the kneading process. The former case is superior in that the solvent can easily impregnate through the entire electrode material precursor. The latter case is superior in that the electrode material precursor is less likely to diffuse. More specifically, the mode of the kneading process is preferably the following methods.
- Mode of producing a mixture (e.g., slurry, cake, etc.) of the alkali metal supplying source, the conductive bead, the solvent, and the electrode material precursor which is the amorphous aggregate, and kneading the produced mixture.
- Mode of producing a mixture (e.g., slurry, cake, etc.) of the conductive bead, the solvent, and the electrode material precursor which is the amorphous aggregate, and kneading the produced mixture and the alkali metal supplying source in an electrically contacted state.
- Mode of bringing at least one part of the electrode material precursor of the amorphous aggregate and the solvent into contact before the start of kneading on the alkali metal supplying source, the conductive bead, and the electrode material precursor of the amorphous aggregate, and additionally introducing the solvent after the start of the kneading process.
- Mode of bringing at least one part of the electrode material precursor and the alkali metal into contact before the start of kneading on the conductive bead and the electrode material precursor of the amorphous aggregate, additionally introducing the solvent after the start of the kneading process, and bringing the solvent and the alkali metal supplying source into contact.
- Mode of bringing the solvent and the alkali metal supplying source into contact before the start of kneading on the conductive bead and the electrode material precursor of the amorphous aggregate, and bringing the solvent and the electrode material precursor into contact after the start of the kneading process.
- Mode of bringing the solvent and the electrode material precursor into contact after the start of kneading with respect to the alkali metal supplying source, the conductive bead, and the electrode material precursor.
- Mode of bringing the solvent into contact with both the electrode material precursor and the alkali metal supplying source after the start of kneading on the conductive bead and the electrode material precursor of the amorphous aggregate.

The temperature in the kneading process is preferably within a range of 25°C to 70°C. If the temperature is within such range, the safety is ensured, and the doping of the alkali metal with respect to the active material can be efficiently advanced. When the temperature becomes high, the doping speed also tends to become fast. When it is desired to increase the doping speed, the kneading process is preferably carried out with the temperature at higher than or equal to 40°C.

The manufacturing method for the electrode material of the present disclosure may further include a discharging process of continuously discharging the electrode material precursor subjected to the kneading process. When referring to continuously discharging, this means carrying out the kneading in the container and the discharging from the container of the electrode material precursor subjected to the kneading process in parallel. The supply of the electrode material precursor to the container may be continuously carried out or may be carried out in a batch form (batch wise manner). The high-quality electrode material can be efficiently obtained by continuously discharging.

The electrode material obtained in the present embodiment can be used for the electrode, the capacitor, and the battery. The electrode, the capacitor, and the battery, as well as the manufacturing methods for the same are similar to the first embodiment.

### 2. Manufacturing device for electrode material

The manufacturing device for the electrode material of the present disclosure includes (A) a container that accommodates the electrode material precursor including at least the active material, the alkali metal supplying source, the solvent, and the conductive bead, and (B) a dynamic pressurizer that kneads, stirs, or mixes the electrode material precursor.

The container is not particularly limited as long as it can accommodate the electrode material precursor, the alkali metal supplying source, the solvent, and the conductive bead. The dynamic pressurizer includes, for example, a rotatable rotor, a device for rotating the container, a device for vibrating the container, and the like.

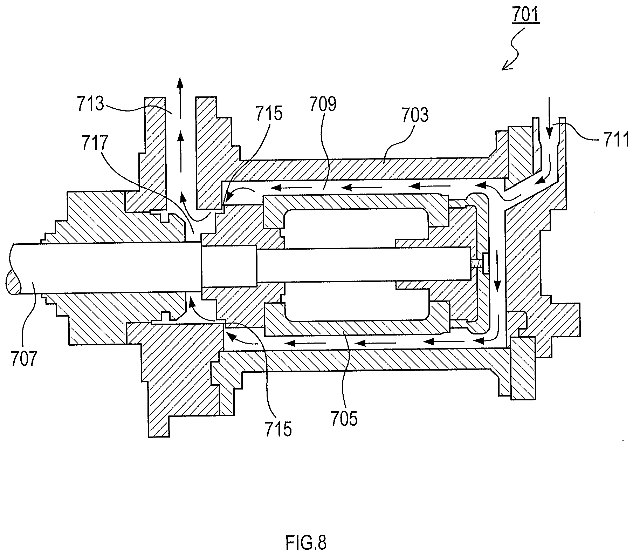

The manufacturing device for the electrode material of the present disclosure may have, for example, a structure of a bead mill 701 shown in Fig. 8. The bead mill 701 includes a vessel 703, a rotor 705, and a drive shaft 707. The vessel 703 has a basic form of a hollow cylindrical shape. The vessel 703 interiorly includes a kneading chamber 709. Furthermore, the vessel 703 includes a supply port 711 on a side surface on one end side (hereinafter referred to as distal end side) in the axial direction thereof. The supply port 711 communicates the kneading chamber 709 and the exterior. Furthermore, the vessel 703 includes an ejection port 713 on a side surface on a side (hereinafter referred to as root side) opposite the distal end side in the axial direction thereof. The ejection port 713 communicates a bead separating portion 715, to be described later, and the exterior. Furthermore, the vessel 703 includes an opening 717 on the root side.

The rotor 705 has a cylindrical shape. A guide member (not shown) described in Japanese Patent Publication No. 4-70050 is formed on the peripheral surface. The guide member has a function of flowing the electrode material precursor, the alkali metal supplying source, the solvent, and the conductive bead (hereinafter referred to as kneading subject) in a substantially plug flow form.

The rotor 705 is passed through the opening 717 and inserted to the kneading chamber 709. A gap is formed between the peripheral surface of the rotor 705 and the inner surface of the kneading chamber 709, and the kneading subject can flow through such gap. The bead separating portion 715 is provided between the root side of the rotor 705 and the inner surface of the kneading chamber 709. The bead separating portion 715 is a screen that separates the conductive bead from the kneading subject, and passes the other components.

The drive shaft 707 is inserted to the center of the rotor 705, and is coupled to a drive source (not shown). When the drive shaft 707 rotates, the rotor 705 also rotates.

The bead mill 701 can be used in the following manner. The conductive bead is accommodated in the kneading chamber 709 in advance. Furthermore, the rotor 705 is rotated. The mixture of the electrode material precursor, the alkali metal supplying source, and the solvent is continuously supplied from the supply port 711 in such state. As a result, the kneading subject is produced in the kneading chamber 709. The kneading subject is kneaded while flowing the inside of the kneading chamber 709 in a substantially plug flow form toward the bead separating portion 715. The bead separating portion 715 separates the conductive bead from the kneading subject. After the bead separating portion 715 passes, the mixture of the electrode material precursor, the alkali metal supplying source, and the solvent is sequentially passed through the opening 717 and the ejection port 713, and continuously discharged. The vessel 703 corresponds to the container. The rotor 705 corresponds to the kneader.

The manufacturing device for the electrode material of the present disclosure may, for example, have a structure of a spinning/revolving (vacuum) mixer. The spinning/revolving (vacuum) mixer includes Awatori Rentaro (product name) manufactured by Thinky Corporation. The manufacturing device for the electrode material of the present disclosure may include a pot mill rotating table in example 3A, a digital shaker in example 3B, and the like, to be described later, for the kneader.

The manufacturing device for the electrode material of the present disclosure may include a mechanism that controls the temperature in the container, a mechanism that controls the pressure in the container, a mechanism that controls an atmosphere gas in the container, and the like, as necessary.

### 3. Example

Hereinafter, the embodiment of the present disclosure will be described more specifically using examples. However, the present disclosure is not limited to the following examples.

### (Example 2A)

### (1) Manufacture of electrode material

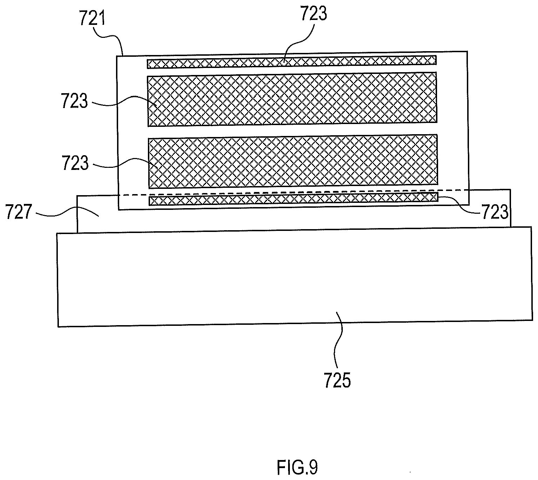

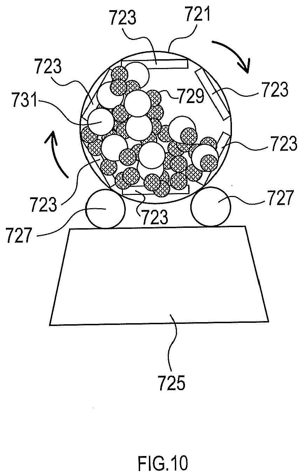

A cylindrical container 721 shown in Figs. 9 and 10 was prepared. The material of the container 721 is polypropylene. The inner diameter of the container 721 is 100 mm, and the axial length is 180 mm. In the inner wall of the container 721, six lithium supplying sources 723 are fixed to the side surface portion with screws.

The lithium supplying source 723 is manufactured as below. First, six of that in which one lithium metal foil is stacked on a copper foil was prepared. The purity of lithium metal is greater than or equal to 99%. The size of each copper foil is 25 mm × 80 mm × 0.02 mm. The size of each lithium metal foil is 20 mm × 75 mm × 0.2 mm.

Next, the stacked lithium metal foil and the periphery thereof were coated with a resin separator. The thickness of the resin separator is 20 µm. The hole diameter in the resin separator is 0.5 µm. The void ratio in the resin separator is 45%. The resin separator corresponds to a coating material. Next, a stainless mesh was placed on the lithium metal foil coated with the resin separator. As a result, the lithium metal foil is held between the copper foil and the stainless mesh. The size of the stainless mesh is 30 mm × 90 mm × 0.1 mm. The mesh size of the stainless mesh is 200 meshes.

A portion not coated with the resin separator of the end of the copper foil and the stainless mesh were then welded with a spot-welding device to ensure conduction of a plate of the lithium metal and the stainless mesh.

Graphitic powder of 36 g was added to the container 721. The graphitic powder is obtained by vacuum drying for six hours. The graphitic powder is a negative electrode active material not doped with alkali metal, and corresponds to the electrode material precursor. 50% volume cumulative diameter D50 of the graphitic powder is 20 µm. The form of the graphitic powder corresponds to the amorphous aggregate.

Electrolytic solution of 72 g was then introduced into the container 721. The electrolytic solution is a solution in which 1.0M of LiPF6 is dissolved in a solvent in which ethylene carbonate and methyl ethyl carbonate are mixed at a volume ratio of 3:7.

Stainless sphere of 1,000 g having a diameter of 3 mm was then added into the container 721. The stainless sphere corresponds to the conductive bead. Next, the lid of the container 721 was closed, and the container 721 was placed on the pot mill rotating table 725 shown in Figs. 9 and 10. In this case, the axial direction of the container 721 is a horizontal direction. The pot mill rotating table 725 corresponds to the kneader. The combination of the container 721 and the pot mill rotating table 725 corresponds to the manufacturing device for the electrode material.

Next, a roller 727 in the pot mill rotating table 725 was rotated at 400 rpm. Here, the container 721 rotated with its axis as a center, and the graphitic powder 729, the electrolytic solution, and the stainless sphere 731 were kneaded in the presence of the lithium supplying source 723. The plate of the lithium metal included in the lithium supplying source 723 disappeared after 20 hours from the start of kneading.

Then, the content of the container 721 was taken out, and the stainless sphere and the other components were separated using a sifter having a mesh of 1 mm. The component that passed the sifter is the mixture (hereinafter assumed as an electrode material containing solution) of the graphitic powder after doping and the electrolytic solution. The graphitic powder after doping corresponds to the electrode material.

### (2) Evaluation of electrode material

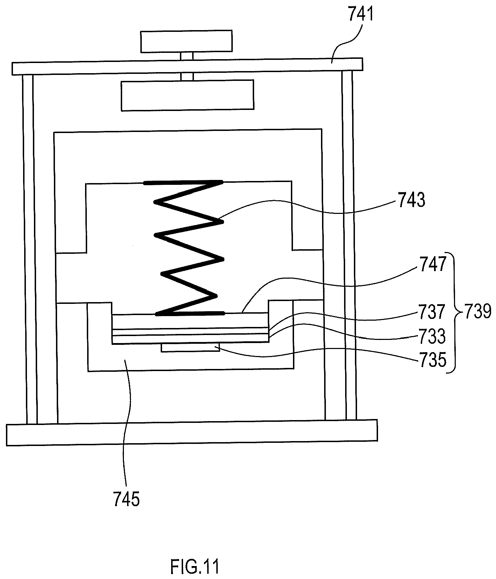

Electrode material containing solution of 0.5 ml was sucked using a dropper, 0.2 ml of which was then dropped onto the glass separator. As a result, a layer of electrode material formed on the surface of the glass separator. Next, as shown in Fig. 11, the glass separator 733 was turned upside down so that the surface formed with the layer 735 of the electrode material becomes the lower surface. The lithium metal 737 was then arranged on the glass separator 733, and a bipolar cell 739 was assembled. The potential of the two poles was measured while pushing the bipolar cell 739 in the up and down direction with a pushing device 741. The pushing device 741 carries out pushing using a spring 743. In the pushing device 741, the material of a portion 745 that comes into contact with the lower surface of the bipolar cell 739 is the PP resin, and a portion 747 that comes into contact with the upper surface of the bipolar cell 739 is the nickel plate.

As a result of the measurement, the potential of the working electrode indicated 80 mV. As the potential of the graphite not doped with lithium is about 3V with respect to the lithium metal, it was found through the processes described above that lithium was doped in the graphitic powder.

### (Example 2B)

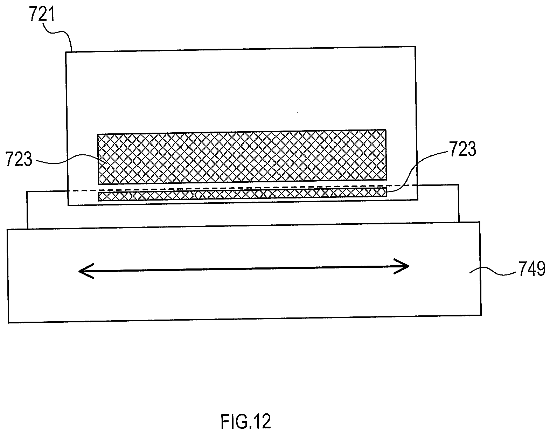

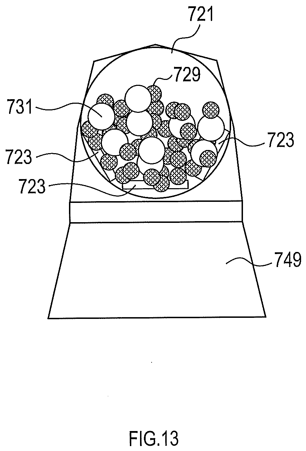

The container 721 in the present example is basically similar to example 3A, but differs in the following points. As shown in Figs. 12 and 13, in the present example, three lithium supplying sources 723 are fixed to a half-peripheral portion in the side surface of the inner wall of the container 721 with a screw. The lithium supplying source 723 is not attached to the remaining half-peripheral portion in the side surface.

Furthermore, the lithium supplying source 723 was manufactured as below. First, three of that in which one plate of lithium metal is stacked on a copper foil was prepared. The purity of lithium metal is greater than or equal to 99%. The size of each copper foil is 25 mm × 80 mm × 0.02 mm. The size of each plate of lithium metal is 20 mm × 75 mm × 0.4 mm.

Next, the periphery of the stacked plate of lithium metal was coated by the resin separator. Next, a stainless mesh was placed on the plate of lithium metal coated by the resin separator. As a result, the plate of lithium metal was held between the copper foil and the stainless mesh. The size of the stainless mesh is 30 mm × 90 mm × 0.1 mm. The mesh size of the stainless mesh is 200 meshes.

A portion not coated with the resin separator of the end of the copper foil and the stainless mesh were then welded with a spot-welding device to ensure conduction of a plate of the lithium metal and the stainless mesh.

Graphitic powder of 36 g was added to the container 721. The graphitic powder is the same as that used in example 3A. Electrolytic solution of 72 g was then introduced into the container 721. The electrolytic solution is the same as that used in example 3A. Stainless sphere of 1,000 g was then added to the container 721. The stainless sphere is the same as that used in example 3A.

Next, the lid of the container 721 was closed, and the container 721 was placed on a digital shaker 749 shown in Figs. 12 and 13. In this case, the axial direction of the container 721 is a horizontal direction. The orientation of the container 721 is the orientation in which the lithium supplying source 723 is on the lower side. The digital shaker 749 was then vibrated in the left and right direction (left and right direction in Fig. 12). The vibration number is 120 reciprocations/min.

In this case, the container 721 was vibrated in the left and right direction, and the graphitic powder 729, the electrolytic solution, and the stainless sphere 731 were kneaded in the presence of the lithium supplying source 723. The plate of the lithium metal included in the lithium supplying source 723 disappeared after 24 hours from the start of kneading. The digital shaker 749 corresponds to the kneader. The combination of the container 721 and the digital shaker 749 corresponds to the manufacturing device for the electrode material.

Then, the content of the container 721 was taken out, and the stainless sphere and the other components were separated using a sifter having a mesh of 1 mm. The component that passed the sifter is the mixture (hereinafter assumed as an electrode material containing solution) of the graphitic powder after doping and the electrolytic solution. The graphitic powder after doping corresponds to the electrode material.

### (2) Evaluation of electrode material

As with the example 3A, the bipolar cell was created using the electrode material containing solution, and the potential of the two poles was measured. As a result of the measurement, the potential of the working electrode indicated 85 mV. As the potential of the graphite not doped with lithium is about 3V with respect to the lithium metal, it was found through the processes described above that lithium was doped in the graphitic powder.

### (Comparative example 2A)

The method is basically similar to example 2A, but the electrode material was manufactured using zirconium sphere in place of the stainless sphere. The electrode material was evaluated, as with example 2A. As a result of the measurement, the potential of the working electrode indicated 200 mV. The lithium was doped to where the lithium metal and the graphitic powder were directly brought into contact, but the lithium was not doped to the graphitic powder brought into contact with the zirconium bead, which is the non-conductive bead, and the potential rose.

### (Comparative example 2B)

The method is basically similar to example 2B, but the electrode material was manufactured using zirconium sphere in place of the stainless sphere. The electrode material was evaluated, as with example 2B. As a result of the measurement, the potential of the working electrode indicated 200 mV. The lithium was doped to where the lithium metal and the graphitic powder were directly brought into contact, but the lithium was not doped to the graphitic powder brought into contact with the zirconium bead, which is the non-conductive bead, and the potential rose.

### <Third Embodiment

### 1. Manufacturing method for electrode material

### (1-1) Depressurizing process

The manufacturing method for the electrode material of the present disclosure includes a depressurizing process. In the depressurizing process, the mixed solution including at least the active material is placed in a depressurized state. The depressurizing process can be carried out by, for example, depressurizing the inside of the container accommodating the mixed solution. The inside of the container may be depressurized after the mixed solution is accommodated in the container, or the mixed solution may be accommodated in the container in which the inside is depressurized in advance. In the depressurizing process, the mixed solution merely needs to be placed in the depressurized state, and the depressurizing operation does not necessarily need to be continued.

The depressurizing process, for example, can be carried out before the doping process. Furthermore, at least one part of the doping process can be carried out at the same time as carrying out the depressurizing process. In this case, the mixed solution is placed in the depressurized state in at least one part of the doping process.

The pressure in the depressurized state is, for example, within a range of 0.01 kPa to 0.05 MPa. Within such range, the resistance of the doped active material can be reduced. The reason is assumed to be that the film thickening of the SEI coated film can be further suppressed.

The lower limit of the pressure is preferably greater than or equal to 0.02 kPa, more preferably greater than or equal to 0.05 kPa, and still more preferably greater than or equal to 0.1 kPa. The upper limit of the pressure is preferably smaller than or equal to 0.02 MPa, more preferably smaller than or equal to 0.01 MPa, and still more preferably smaller than or equal to 5 kPa.

For example, the mixed solution can be prepared before the depressurizing process, and thereafter, the mixed solution can be placed in the depressurized state. This case excels in productivity. Furthermore, for example, the solvent may be placed in the depressurized state, and thereafter, the active material may be added to the solvent to prepare the mixed solution. Moreover, for example, the active material may be placed in the depressurized state, and thereafter, the solvent may be added to the active material to prepare the mixed solution.

The depressurizing process may be carried out in a state the alkali metal supplying source does not exist or may be carried out in the presence of the alkali metal supplying source. When referring to in the presence of the alkali metal supplying source and the solvent in the present embodiment, this means that (1) the alkali metal originating from the alkali metal supplying source and the active material are in an electrically connected state, and (2) the alkali metal supplying source and the mixed solution are in a contacting state.

An example of (1) includes a case in which the alkali metal supplying source and the active material are in direct contact with each other, a case in which a conductive body is present between the alkali metal supplying source and the active material, and the like.

The active material is not particularly limited as long as it is an electrode active material that can be applied to a power accumulating device using insertion/desorption of alkali metal ions, and it may be a negative electrode active material or may be a positive electrode active material.

The negative electrode active material is not particularly limited, and includes, for example, that described in the first embodiment.

The positive electrode active material includes, for example, that described in the first embodiment. Both the positive electrode active material and the negative electrode active material may be formed by a single substance or may be formed by mixing two or more types of substances. The manufacturing method for the electrode material of the present disclosure is suited when the alkali metal is doped to the negative active material, and in particular, further suited when the negative electrode active material is a carbon material or a material including Si or an oxide thereof.

Generally, when the carbon material is used for the active material, the power accumulating device having a low internal resistance is obtained as the particle diameter of the carbon material becomes smaller, but the irreversible capacity becomes larger, and the amount of gas generated when the power accumulating device is held in a charged state becomes large. Such problem can be suppressed even when the carbon material having a 50% volume cumulative diameter D50 of 0.1 to 50 µm is used for the active material by using the manufacturing method for the electrode material of the present disclosure. The 50% volume cumulative diameter D50 is a value measured by laser diffraction/scattering method.

Furthermore, the irreversible capacity generally tends to become larger even when the material including Si or the oxide thereof is used for the active material. Such problem can be suppressed by using the manufacturing method for the electrode material of the present disclosure.

The solvent included in the mixed solution includes, for example, a solvent having alkali metal ion conducting property. The solvent is preferably an organic solvent, and is still more preferably an aprotic organic solvent. The aprotic organic solvent includes, for example, that described in the first embodiment. The organic solvent may consist of a single component, or may be a mixed solvent consisting of two or more types of components.

The alkali metal salt is preferably dissolved in the solvent. The alkali metal salt includes, for example, lithium salt, sodium salt, or the like.

The anionic part configuring the alkali metal salt includes, for example, that described in the first embodiment. A single alkali metal salt may be dissolved or two or more types of alkali metal salt may be dissolved in the solvent.

An additive such as vinylene carbonate, vinyl ethylene carbonate, 1-fluoro ethylene carbonate, 1-(trifluoromethyl) ethylene carbonate, succinic anhydride, maleic anhydride, propanesulton, diethyl sulfone, and the like may be further dissolved in the solvent.

The content proportion of the active material in the mixed solution is preferably 30 % by mass to 90 % by mass with respect to the total amount of mixed solution. Within such range, the doping speed of the lithium can be further enhanced.

The SEI coated film in the active material can be suppressed from becoming excessively thick by carrying out the depressurizing process. The reason is assumed to be because O2, N2 remaining in the active material are removed by carrying out the depressurizing process.

Furthermore, the impregnation of the solvent (e.g., electrolytic solution) into the pores of the active material is promoted by carrying out the depressurizing process
, and as a result, the doping of the alkali metal (hereinafter also simply referred to as doping) is further advanced in the doping process.

### (1-2) Doping process

The manufacturing method for the electrode material of the present disclosure includes a doping process of doping the alkali metal to the active material. The doping process, for example, can be carried out after the depressurizing process. Furthermore, for example, at least one part of the doping process may be carried out with the depressurizing process (i.e., at the same time as). Moreover, part of the doping process may be carried out before the depressurizing process.

In the doping process, for example, the mixed solution can be kneaded, stirred, or mixed. When the mixed solution is stirred, the doping can be uniformly carried out. A known configuration can be appropriately selected and used for the stirring of the mixed solution. For example, the stirring can be carried out using the kneading and mixing machine, the stirring blade, and the like.

In the doping process, the alkali metal is doped in the active material in the presence of the alkali metal supplying source and the solvent. When referring to in the presence of the alkali metal supplying source and the solvent in the present embodiment, this means that (1) the alkali metal originating from the alkali metal supplying source and the active material are in an electrically connected state, (2) the solvent and the active material are in a contacting state, and (3) the alkali metal supplying source and the solvent are in a contacting state. An example of (1) includes a case in which the alkali metal supplying source and the active material are in direct contact with each other, a case in which a conductive body is present between the alkali metal supplying source and the active material, and the like.

An alkali metal in the alkali metal supplying source includes, for example, lithium, sodium, and the like. The form of alkali metal supplying source is not particularly limited, and for example, may be the form described in the first embodiment.

The alkali metal supplying source in the particle etc. form can coexist with the aggregate including the active material. In this case, the alkali metal supplying source in the particle etc. form is preferably made into small pieces or atomized to increase the doping speed. When the alkali metal supplying source in a foil state is used, the thickness thereof is preferably within a range of 10 to 500 µm, and when the alkali metal supplying source in a particle state is used, the average particle diameter thereof is preferably within a range of 10 to 500 µm.

The solvent used in the doping process may be the same as the solvent included in the mixed solution or may be a different solvent. In the doping process, for example, a solution (hereinafter referred to as an electrolytic solution) in which alkali metal salt is dissolved in the solvent can be used. The concentration of the alkali metal ion (alkali metal salt) in the electrolytic solution is preferably greater than or equal to 0.1 mol/L, and more preferably within a range of 0.5 to 1.5 mol/L. Within such range, the doping of the alkali metal with respect to the active material can be efficiently advanced.

An additive such as vinylene carbonate, vinyl ethylene carbonate, 1-fluoroethylene carbonate, 1-(trifluoromethyl) ethylene carbonate, succinic anhydride, maleic anhydride, propanesultone, diethyl sulfone, and the like may be further dissolved in the solvent.

The electrode material obtained in the present embodiment can be used for the electrode, the capacitor, and the battery. The electrode, the capacitor, and the battery, as well as the manufacturing methods thereof are similar to the first embodiment.

### 2. Manufacturing device for electrode material

The manufacturing device for the electrode material of the present disclosure includes (A) a container that accommodates the mixed solution including at least the active material and the alkali metal supplying source, and (B) a depressurizing part that depressurizes the inside of the container.

The container is not particularly limited as long as it accommodates the mixed solution and the alkali metal supplying source. A container having high sealability is preferable to facilitate the depressurization of the inside of the container.

The depressurizing part is not particularly limited as long as it can depressurize the inside of the container. The depressurizing part includes, for example, a diaphragm pump, a rotary pump, and the like.

The manufacturing device for the electrode material of the present disclosure may further include, for example, a stirrer that stirs the inside of the container, a temperature controller that controls the temperature in the container, and the like.

The manufacturing method for the electrode material described above can be easily performed by using the manufacturing device for the electrode material of the present disclosure. As a result, the SEI coated film in the active material can be suppressed from becoming excessively thick.

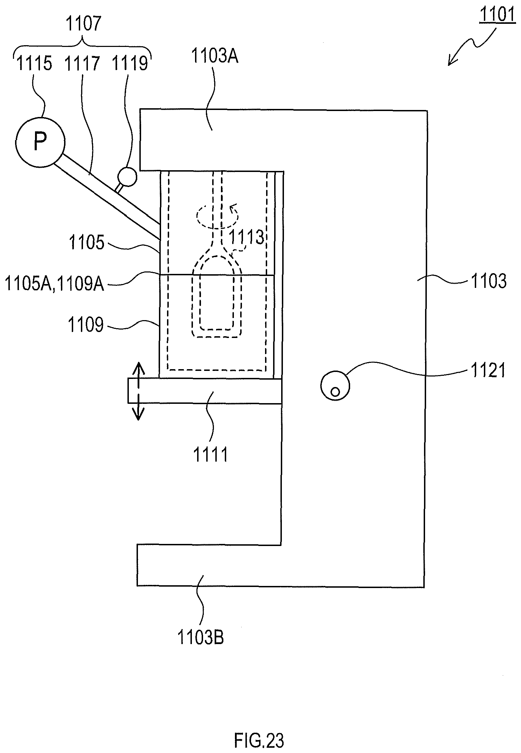

A configuration of the manufacturing device (hereinafter referred to as manufacturing device 1101) for the electrode material will be described based on Fig. 23. The manufacturing device 1101 is a kneading and mixing machine. For example, HIVIS MIX manufactured by PRIMIX Corporation, planetary mixer and trimix manufactured by Inoue MFG., Inc., and the like may be adopted for the kneading and mixing machine similar to the manufacturing device 1101. The kneading and mixing can also be carried out using a ball mill, a bead mill, a swivel high speed mixer (e.g., Philmix manufactured by PRIMIX Corporation), homogenizer, disperser, and the like.

The manufacturing device 1101 includes a main body 1103, a hood 1105, a depressurizing part 1107, a container 1109, a supporting table 1111, and a blade 1113. The main body 1103 includes an upper side overhanging portion 1103A overhanging in the lateral direction from the vicinity of the upper end. The main body 1103 also includes a lower side overhanging portion 1103B overhanging in the same direction as the upper side overhanging portion 1103A from the vicinity of the lower end.

The hood 1105 is attached to the lower surface of the upper side overhanging portion 1103A. The hood 1105 is a hollow cylindrical member in which the lower side is opened. The depressurizing part 1107 is attached to the side surface of the hood 1105. The depressurizing part 1107 includes a diaphragm pump 1115, a vacuum plumbing 1117, and a vacuum gauge 1119. One end of the vacuum plumbing 1117 is connected to the hood 1105, and the end on the opposite side is connected to the diaphragm pump 1115. The depressurizing part 1107 can depressurize the inside of the hood 1105 and the container 1109 using the diaphragm pump 1115. The vacuum gauge 1119 is attached to a portion on the hood 1105 side of the vacuum plumbing 1117. The vacuum gauge 1119 displays the pressure of the inside of the hood 1105 and the container 1109.

The container 1109 is a hollow cylindrical member in which the upper side is opened. The diameter of the container 1109 and the diameter of the hood 1105 are the same. An upper end 1109A of the container 1109 and a lower end 1105A of the hood 1105 are closely attached to obtain an air tight structure in between.

The supporting table 1111 is a plate-shaped member overhanging in the same direction as the upper side overhanging portion 1103A and the lower side overhanging portion 1103B from the main body 1103. The position in the up and down direction of the supporting table 1111 is between the upper side overhanging portion 1103A and the lower side overhanging portion 1103B. The supporting table 1111 is raised and lowered when the user turns a handle 1121 arranged on the main body 1103.

The supporting table 1111 supports the container 1109 from the lower side. The upper end 1109A and the lower end 1105A can be closely attached by placing the container 1109 on the supporting table 1111 and raising the supporting table 1111. Hereinafter, the position of the container 1109 where the upper end 1109A and the lower end 1105A are closely attached is assumed as an in-use position. At the in-use position, the container 1109 is fixed by a clamp (not shown). Furthermore, the container 1109 can be lowered and separated from the hood 1105 by lowering the supporting table 1111.

The blade 1113 is extended toward the lower side from the lower surface of the upper side overhanging portion 1103A. The blade 1113 passes through the hood 1105, and projects out toward the lower side from the hood 1105. When the container 1109 is at the in-use position, the blade 1113 is inserted from the upper side to the inside of the container 1109. The blade 1113 rotates by a driving force supplied by the driving part (not shown). The axial direction of rotation is a vertical direction. The blade 1113 corresponds to the stirrer.

### 3. Example

The present disclosure will be specifically described below based on the examples, but the present disclosure is not limited to such examples. Here, "part" and "%" in the examples and reference examples are mass standards unless particularly stated otherwise.

### (Example 3A)

### (1) Manufacture of electrode material

Hard carbon of 150 g (negative electrode active material, 50% volume cumulative diameter D50=20 µm) vacuum dried for six hours, 64 g of electrolytic solution, and 3.38 g of lithium metal piece were mixed to prepare a mixed solution. The electrolytic solution includes LiPF6 of concentration 1M. The solvent of the electrolytic solution includes EC (Ethylene Carbonate) and PC (Propylene carbonate) such that a volume ratio is 5:5. The lithium metal piece was obtained by cutting the lithium metal foil having a thickness of 100 µm and weight of 3.38 g so that each lithium metal piece became about 4 cm². The lithium metal pieces were arranged so as to be even as much as possible in the mixed solution. The lithium metal piece corresponds to the alkali metal supplying source.

The mixed solution was then accommodated in the container 1109 of the manufacturing device 1101 for the electrode material described above, and the position of the container 1109 was moved to the in-use position. In this case, the blade 1113 was immersed in the mixed solution. The inside of the container 1109 was then depressurized for ten minutes using the depressurizing part 1107. At this time, the pressure in the container 1109 is 2.0 kPa. The diaphragm pump 1115 was then stopped, the inside of the container 1109 was replaced to an atmosphere of normal pressure controlled to a dew point of -50 to -60°C, and the blade 1113 was rotated for 30 hours under the condition of the rotation speed of 30 rpm to stir the mixed solution. After the stirring was stopped, the container 1109 was lowered, and the mixed solution was taken out from the container 1109. Furthermore, the hard carbon doped with lithium was separated from the mixed solution.

Time from the time point of starting the depressurization to the time point the diaphragm pump 1115 was stopped corresponds to the depressurizing process. Time from the time point the mixed solution was prepared to the time point of stopping the stirring corresponds to the doping process. In the doping process, a period from the time point of starting the depressurization to the time point of stopping the stirring was carried out with the depressurizing process.

### (2) Measurement of OCV

Part of the hard carbon powder doped with lithium was separated and taken out from the mixed solution being stirred, and the OCV was measured. The measuring method is as described below. First, two perforated copper foils of 16 mmϕ were prepared through the punching method. Next, the two perforated copper foils were overlapped, and ultrasonically welded excluding an opening of one area in the outer peripheral portion to manufacture a bag.

Hard carbon of 30 mg was added to such bag, and the opening of the bag was ultrasonically welded to form an evaluation electrode. A tripolar cell having the evaluation electrode as a working electrode and the lithium metal as a counter electrode and a reference electrode was assembled. The electrolytic solution of the same composition as the electrolytic solution described above was injected to the tripolar cell. The potential (OCV) of the working electrode with respect to the lithium metal immediately after the injection was then measured.

Numerical values of the OCV in the 20 hours after the start of stirring of the hard carbon doped with lithium are shown in table 1.

**[Table 1]**

| | Example 3A | Example 3B | Example 3C | Example 3D | Reference Example 3 |
|---|---|---|---|---|---|
| OCV/V | 0.90 | 0.73 | 0.77 | 0.67 | 1.01 |

### (Example 3B)

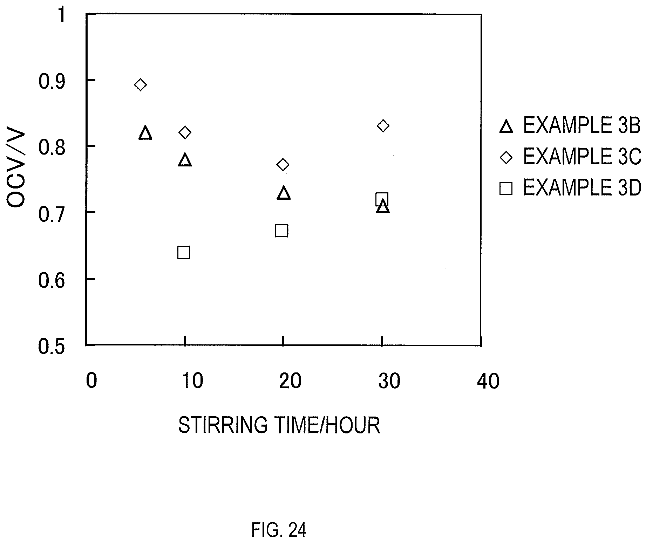

The processes similar to example 3A were carried out, that means the inside of the container 1109 was depressurized for ten minutes, and with the pressure in the container 1109 as 2.0 kPa, the diaphragm pump 1115 is stopped.. Then, the blade 1113 was rotated for 30 hours under the condition of the rotation speed of 30 rpm to stir the mixed solution. In stirring, the pressure in the container 1109 was maintained in the depressurized state. The lithium piece disappeared when the stirring was finished. The stirring was then stopped, and after returning to the normal pressure, the container 1109 was lowered, the mixed solution was taken out from the container 1109, and the hard carbon doped with lithium was separated from the mixed solution. In the present example as well, the OCV of the hard carbon doped with lithium was measured. Numerical values of the OCV in the 20 hours after the start of stirring are shown in table 1. A temporal change of the OCV with elapse of stirring time is shown in Fig. 24. The doping of the lithium was assumed to be promoted by depressurizing to 2.0 kPa during the doping process, and after the start of stirring, the OCV was stably lowered, and satisfactory SEI coated film assumed to have formed.

### (Example 3C)

The processes similar to example 3A were carried out, that means the inside of the container 1109 was depressurized for ten minutes, and with the pressure in the container 1109 as 2.0 kPa, the diaphragm pump 1115 is stopped. After the atmosphere was pressurized to 0.048 MPa, the blade 1113 was then rotated for 30 hours under the condition of the rotation speed of 30 rpm to stir the mixed solution. The stirring was then stopped, and after returning to the normal pressure, the container 1109 was lowered, the mixed solution was taken out from the container 1109, and the hard carbon doped with lithium was separated from the mixed solution. In the present example as well, the OCV of the hard carbon doped with lithium was measured. Numerical values of the OCV in the 20 hours after the start of stirring are shown in table 1. A temporal change of the OCV with elapse of stirring time is shown in Fig. 24.

### (Example 3D)

The processes similar to example 5A were carried out, that means the inside of the container 1109 was depressurized for ten minutes, and with the pressure in the container 1109 as 2.0 kPa, the diaphragm pump 1115 is stopped. Then, the inside of the container 1109 was replaced with Ar of normal pressure. The blade 1113 was then rotated for 30 hours under the condition of the rotation speed of 30 rpm to stir the mixed solution. Then, the mixed solution was taken out from the container 1109, and the hard carbon doped with lithium was separated from the mixed solution.

Time from the time point of starting the depressurization to the time point the inside of the container 1109 was replaced with Ar corresponds to the depressurizing process. Time from the time point the mixed solution was prepared to the time point the lithium metal piece disappeared corresponds to the doping process. In the doping process, a period from the time point of starting the depressurization to the time point the lithium metal piece disappeared was carried out with the depressurizing process. In the present example as well, the OCV of the hard carbon doped with lithium was measured. Numerical values of the OCV in the 20 hours after the start of stirring are shown in table 1. A temporal change of the OCV with elapse of stirring time is shown in Fig. 24. The doping of lithium is considered to be promoted by realizing an Ar atmosphere during the doping process.

### (Reference example 3)

As with example 3A, the mixed solution was prepared, and the mixed solution was added to the container 1109. Next, the mixed solution was stirred for 30 hours under the atmosphere controlled to an air temperature of 25°C and a dew point of -50 to -60°C. In other words, in the present reference example 5, the inside of the container 1109 was not depressurized. Then, the mixed solution was taken out from the container 1109, and the hard carbon doped with lithium was separated from the mixed solution. Numerical values of the OCV in the 20 hours after the start of stirring are shown in table 1.

### <Fourth Embodiment

### 1. Manufacturing method for electrode material

The manufacturing method for the electrode material of the present disclosure includes a separating process. In the separating process, the active material and the alkali metal supplying source are separated in the mixed solution including the active material and the alkali metal supplying source.

The mixed solution may be, for example, a mixed solution produced by the manufacturing method for the electrode material described in the first to third embodiments, or may be a mixed solution obtained by adding a diluted solution to the active material of after the doping process. The diluted solution is usually a solvent, and becomes at least one part of the solvent included in the mixed solution. The solvent in the mixed solution may be, for example, a solvent same as the solvent used in the doping process or may be a solvent of a different type. The active material included in the mixed solution is, for example, doped with alkali metal in the manufacturing method for the electrode material described in the first to third embodiments. The alkali metal supplying source included in the mixed solution is, for example, that in which part of the alkali metal supplying source used in the manufacturing method for the electrode material described in the first to third embodiments is remained. In the mixed solution, the active material and the alkali metal supplying source are, for example, dispersed or dissolved in the solvent.

In the separating process, the amount of solvent included in the mixed solution can be appropriately set so that the active material and the alkali metal supplying source can be easily separated. For example, from the standpoint of enhancing the separation of the active material and the alkali metal supplying source and enhancing the collecting rate of the active material, the lower limit of the amount of solvent included in the mixed solution is preferably greater than or equal to 100 pts. mass, more preferably greater than or equal to 200 pts. mass, and still more preferably 400 pts. mass with respect to 100 pts. mass of active material. Furthermore, from the standpoint of the efficiency of removing the solvent before the process of manufacturing the electrode afterwards, the upper limit of the amount of solvent included in the mixed solution is preferably smaller than or equal to 10,000 pts. mass, more preferably smaller than or equal to 5,000 pts. mass, and still more preferably smaller than or equal to 2,000 pts. mass with respect to 100 pts. mass of active material.

A method for separating the active material and the alkali metal supplying source includes, for example, a method of still standing the mixed solution and a method of fine stirring the mixed solution. The fine stirring referred herein means stirring while maintaining a state in which one of the active material or the alkali metal supplying source precipitates and the other is dispersed in the mixed solution or the other is floating above the mixed solution.

One of the active material or the alkali metal supplying source precipitates and the other is kept dispersed in the mixed solution or the other floats above the mixed solution by still standing or fine stirring the mixed solution. For example, the active material precipitates and the alkali metal supplying source is kept dispersed in the mixed solution or the alkali metal supplying source floats above the mixed solution by still standing the mixed solution. Alternatively, a state in which the alkali metal supplying source is precipitated and the active material is dispersed in the mixed solution is maintained, or floated above the mixed solution by still standing the mixed solution.

Furthermore, the time for still standing or fine stirring the mixed solution is not particularly limited as long as the active material and the alkali metal supplying source can be separated, and may be, for example, longer than or equal to 10 seconds and shorter than or equal to 300 minutes.

The manufacturing method for the electrode material of the present disclosure can include a stirring process of stirring the mixed solution. The alkali metal supplying source attached to the active material is easily dispersed in the mixed solution by including the stirring process. As a result, the alkali metal supplying source included in the active material of after the separating process can be further reduced. The mode of stirring is not particularly limited. For example, the mixed solution can be stirred using a magnetic stirrer, a hand mixer, a stirring blade, and the like. The stirring process may be part of the doping process or may be a process separate from the doping process.

The manufacturing method for the electrode material of the present disclosure can include a diluted solution adding process of adding the diluted solution to the mixed solution before the separating process. The diluted solution to add may be the same as or different from the solvent included in the mixed solution. When the manufacturing method for the electrode material includes the stirring process, the diluted solution adding process can be carried out before the stirring process. The amount of diluted solution to add can be appropriately set so that the active material and the alkali metal supplying source can be easily separated, for example, so that the amount of solvent after the dilution becomes the amount of solvent described in the separating process.

For example, from the standpoint of enhancing the separation of the active material and the alkali metal supplying source and of enhancing the collecting rate of the active material, the lower limit of the amount of diluted solution to add is preferably greater than or equal to 100 pts. mass, more preferably greater than or equal to 200 pts. mass, and still more preferably 400 pts. mass with respect to 100 pts. mass of mixed solution. Furthermore, from the standpoint of the efficiency of removing the solvent before the process of manufacturing the electrode, to be described later, the upper limit of the amount of diluted solution to add is preferably smaller than or equal to 10,000 pts. mass, more preferably smaller than or equal to 5,000 pts. mass, and still more preferably smaller than or equal to 2,000 pts. mass with respect to 100 pts. mass of mixed solution.

The alkali metal supplying source attached to the active material is easily dispersed in the mixed solution by including the diluted solution adding process. As a result, the alkali metal supplying source included in the active material of after the separating process can be further reduced.

### 3) Removing process

The manufacturing method for the electrode material of the present disclosure can include a removing process after the separating process. In the removing process, at least one of the active material and the alkali metal supplying source separated by the separating process is removed from the mixed solution.

In the removing process, for example, the alkali metal supplying source can be removed from the mixed solution. In this case, for example, a portion selectively including the alkali metal supplying source in the mixed solution may be removed from the remaining mixed solution. The remaining mixed solution includes a majority of the active material. The portion selectively including the alkali metal supplying source is the portion that includes the alkali metal supplying source, but does not substantially include the active material in the mixed solution.

Furthermore, in the removing process, for example, the active material may be removed from the mixed solution while the alkali metal supplying source is included in the mixed solution.

The mode of removing is not particularly limited. For example, the component to remove from the mixed solution may be suctioned and removed, or the component to remove from the mixed solution may be discharged. The suction can be carried out, for example, using a suction device such as a poly dropper, a suction nozzle, and the like. The discharge can be carried out, for example, using a discharger such as an open/close valve or, for example, by overflowing the mixed solution.

A cycle including the diluted solution adding process, the stirring process, the separating process, and the removing process can be repeated over plural times. In this case, the alkali metal supplying source included in the active material of after the separating process can be further reduced. At least one part of the diluted solution to be added in the diluted solution adding process may be a solvent included in the mixed solution removed in the removing process.

The electrode material obtained in the present embodiment can be used for the electrode, the capacitor, and the battery. The electrode, the capacitor, and the battery, as well as the manufacturing methods thereof are similar to the first embodiment.

### 2. Manufacturing device for electrode material

The manufacturing device for the electrode material of the present disclosure includes an accommodation container that accommodates the mixed solution including the active material and the alkali metal supplying source, and a remover that removes either the active material or the alkali metal supplying source from the mixed solution.

The form of accommodation container is not particularly limited. The accommodation container may be a sealed container or may be a container which upper side is opened. The material of the accommodation container can be appropriately set, and for example, may be metal, ceramics, and the like.

The mixed solution to accommodate in the accommodation container is as described in "1. Manufacturing method for electrode material" in the present embodiment.

The remover is not particularly limited as long as it can remove at least one of the active material and the alkali metal supplying source from the mixed solution. The remover includes, for example, that which suctions either the active material or the alkali metal supplying source. A specific example of the remover includes a suction device such as a poly dropper and a suction nozzle, and a discharger such as an open/close valve and an overflow collecting tank.

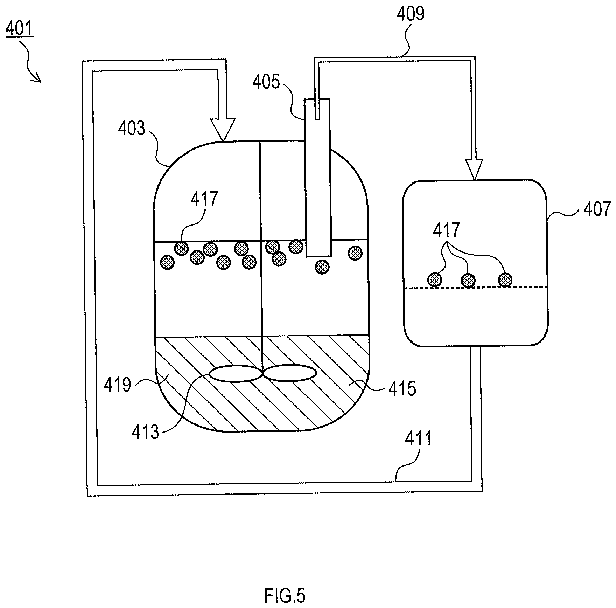

The manufacturing device 1 of the electrode material has, for example, a configuration shown in Fig. 5. A manufacturing device 401 includes an accommodation container 403, a suction nozzle 405, a filter 407, a first piping 409, a second piping 411, and a stirring wing 413. The accommodation container 403 can interiorly accommodate a mixed solution 415 including an active material 419 and an alkali metal supplying source 417. The suction nozzle 405 is attached to an upper part of the accommodation container 403. A distal end side of the suction nozzle 405 is inserted to the inside of the accommodation container 403. The suction nozzle 405 can suction a portion near a liquid level of the mixed solution 415 accommodated in the accommodation container 403. The suction nozzle 405 corresponds to the remover.

The filter 407 separates the alkali metal supplying source 417 included in the mixed solution 415 and the solvent. The first piping 409 feeds the mixed solution 415 suctioned by the suction nozzle 405 to the filter 407. The second piping 411 returns the solvent discharged from the filter 407 to the accommodation container 403.

The manufacturing device 401 can be used, for example, in the following manner. First, the mixed solution 415 is accommodated in the accommodation container 403. In this case, a position of the distal end of the suction nozzle 405 is slightly lower than the liquid level of the mixed solution 415. Next, the mixed solution 415 is still stood or fine stirred. The fine stirring is carried out rotating the stirring wing 413 at low speed. The alkali metal supplying source 417 floats near the liquid level of the mixed solution 415 and the active material 419 precipitates to the bottom of the accommodation container 403 by still standing or fine stirring.

In this state, the portion near the liquid level of the mixed solution 415 is suctioned using the suction nozzle 405. The portion near the liquid level is the portion that selectively includes the alkali metal supplying source 417, and is the portion that does not substantially include the active material 419. The mixed solution 415 suctioned by the suction nozzle 405 is passed through the first piping 409 and fed to the filter 407. The filter 407 separates the alkali metal supplying source 417 included in the mixed solution 415 and the solvent. The filter 407 holds the separated alkali metal supplying source 417 and discharges the solvent. The solvent separated in the filter 407 is passed through the second piping 411 and returned to the accommodation container 403. The active material 419 and the alkali metal supplying source 417 are separated through the above processes.

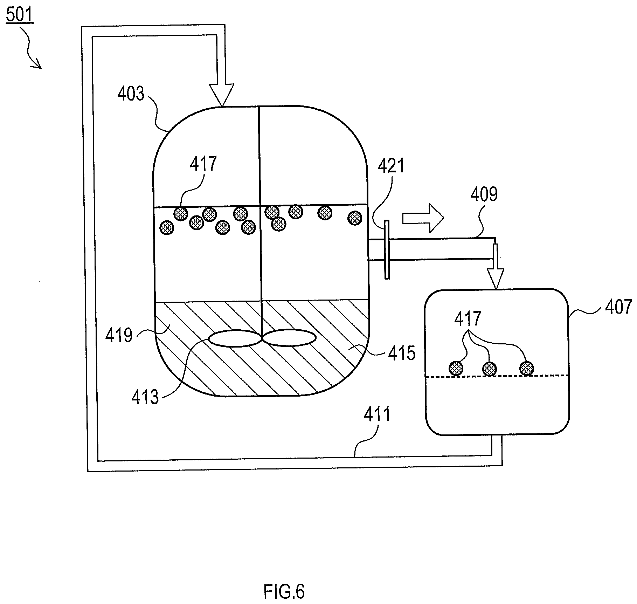

A manufacturing device 501 may have a configuration shown in Fig. 6. The configuration and the method for using the manufacturing device 501 are basically similar to those of the manufacturing device 401, but differ partly. The difference will be mainly described below. The manufacturing device 501 does not include the suction nozzle 405, and the first piping 409 is connected to the side surface of the accommodation container 403. The first piping 409 includes a valve 421 that can be opened and closed. When the valve 421 is opened, the first piping 409 extracts the mixed solution 415 from the side surface of the accommodation container 403, and feeds the mixed solution 415 to the filter 407. The first piping 409 corresponds to the remover.

The manufacturing device 501 can be used, for example, in the following manner. First, the mixed solution 415 is accommodated in the accommodation container 403 with the valve 421 closed. In this case, the position of the portion connected to the first piping 409 in the accommodation container 403 is slightly lower than the liquid level of the mixed solution 415. Next, the mixed solution 415 is still stood or fine stirred. The alkali metal supplying source 417 floats near the liquid level of the mixed solution 415 and the active material 419 precipitates to the bottom of the accommodation container 403 by still standing or fine stirring.

In this state, the portion close to the liquid level of the mixed solution 415 is extracted from the first piping 409 with the valve 421 opened. The portion near the liquid level is the portion that selectively includes the alkali metal supplying source 417, and is the portion that does not substantially include the active material 419. The mixed solution 415 extracted from the first piping 409 is fed to the filter 407. The filter 407 separates the alkali metal supplying source 417 included in the mixed solution 415 and the solvent. The filter 407 holds the separated alkali metal supplying source 417 and discharges the solvent. The solvent separated in the filter 407 is passed through the second piping 411 and returned to the accommodation container 403. The active material 419 and the alkali metal supplying source 417 are separated through the above processes.

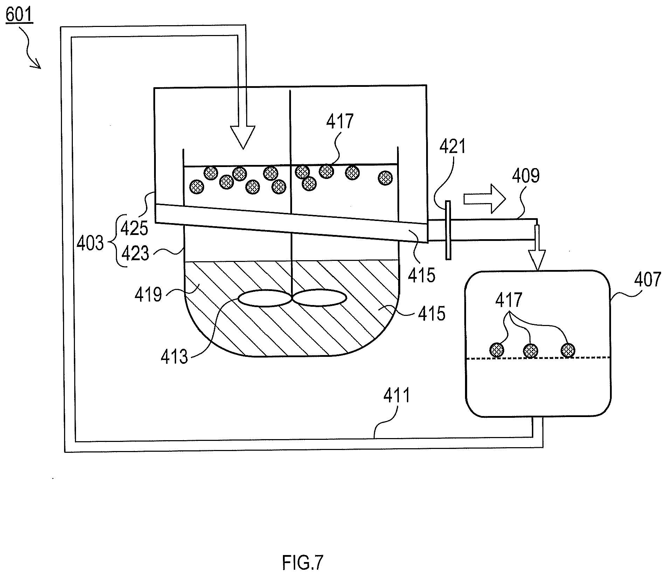

A manufacturing device 601 may have a configuration shown in Fig. 7. The configuration and the method for using the manufacturing device 601 are basically similar to those of the manufacturing device 401, but differ partly. The difference will be mainly described below. The accommodation container 403 in the manufacturing device 601 includes a main body tank 423 and an overflow collecting tank 425. The mixed solution 415 that overflowed from the main body tank 423 enters the overflow collecting tank 425. The manufacturing device 601 does not include the suction nozzle 405, and the first piping 409 is connected to the side surface of the overflow collecting tank 425. The first piping 409 includes a valve 421 that can be opened and closed. When the valve 421 is opened, the first piping 409 extracts the mixed solution 415 from the side surface of the overflow collecting tank 425, and feeds the mixed solution 415 to the filter 407.

The manufacturing device 601 can be used, for example, in the following manner. First, the mixed solution 415 is accommodated in the main body tank 423 with the valve 421 closed. Next, the mixed solution 415 is still stood or fine stirred. The alkali metal supplying source 417 floats near the liquid level of the mixed solution 415 and the active material 419 precipitates to the bottom of the main body tank 423 by still standing or fine stirring.

Then, the diluted solution is further added to the main body tank 423 to overflow the main body tank 423. The valve 421 is then opened. The mixed solution 415 that overflowed and entered the overflow collecting tank 425 is the portion that selectively includes the alkali metal supplying source 417, and is the portion that does not substantially include the active material 419.

The mixed solution 415 in the overflow collecting tank 425 is passed through the first piping 409 and fed to the filter 407. The filter 407 separates the alkali metal supplying source 417 included in the mixed solution 415 and the solvent. The filter 407 holds the separated alkali metal supplying source 417 and discharges the solvent. The solvent separated in the filter 407 is passed through the second piping 411 and returned to the main body tank 423. The active material 419 and the alkali metal supplying source 417 are separated through the above processes.

### 3. Example

Hereinafter, the embodiment of the present disclosure will be described more specifically using examples. However, the present disclosure is not limited to the following examples.

### (Example 4A)

Graphitic powder of 360 mg (negative active material, 50% volume cumulative diameter D50=20 µm) vacuum dried for six hours, 360 mg of electrolytic solution, and 10.8 mg of lithium metal piece were mixed and added to a sample tube, and kneaded and mixed for ten minutes under the condition of the rotation speed of 30 rpm using the hand mixer. As a result, the lithium was doped in the graphitic powder.

The lithium metal piece is obtained by cutting the lithium metal foil having a thickness of 100 µm and a weight of 10.8 mg into four parts. The lithium metal piece corresponds to the alkali metal supplying source. The lithium metal pieces are arranged so as to be even as much as possible in the mixture.

Then, the kneading and mixing by the hand mixer were repeated six times on the mixture to obtain the slurry. Then, the slurry corresponds to the mixed solution including the active material and the alkali metal supplying source.

Dimethyl carbonate of 2.85 g was added to 700 mg (solid content: 355 mg) of the obtained slurry. This process corresponds to the diluted solution adding process. The slurry was then stirred for ten minutes under the condition of the rotation speed of 30 rpm using the magnetic stirrer. This process corresponds to the stirring process. The slurry was still stood for ten minutes. This process corresponds to the separating process. A surface layer portion selectively including the lithium metal piece floating on the surface of the slurry was then removed using the poly dropper. This process corresponds to the removing process.

The removed slurry was then suctioned and filtered to be separated into the lithium metal piece and the solvent. The separated solvent was again added to the sample tube. This process corresponds to the diluted solution adding process.

A cycle including the stirring process, the separating process, the removing process, and the diluted solution adding process (process of adding the solvent obtained from the removed slurry) was repeated for three times to obtain a slurry in which the lithium metal piece is removed. When the obtained slurry was observed with an optical microscope (×500), the remaining lithium metal piece was not found. Furthermore, the collecting rate of the active material was 99%.

### (Reference example 2)

Graphitic powder of 360 mg (negative active material, 50% volume cumulative diameter D50=20 µm) vacuum dried for six hours, 360 mg of electrolytic solution, and 10.8 mg of lithium metal piece were mixed and added to a sample tube, and kneaded and mixed for ten minutes under the condition of the rotation speed of 30 rpm using the hand mixer.

The lithium metal piece is obtained by cutting the lithium metal foil having a thickness of 100 µm and a weight of 10.8 mg into four parts. The lithium metal pieces are arranged so as to be even as much as possible in the mixture. The kneading and mixing by the hand mixer were repeated six times on the mixture to obtain the slurry.

Dimethyl carbonate of 2.85 g was added to 700 mg (solid content: 355 mg) of the obtained slurry, and then suctioned and filtered. Furthermore, the process of adding 2.85 g of dimethyl carbonate to the suctioned and filtered slurry, and then carrying out suctioning and filtering was repeated for three times.

When the obtained slurry was observed with an optical microscope (×500), it was found that a microscopic lithium piece was remaining. Furthermore, the collecting rate of the active material was 99%.

### <Fifth Embodiment

### 1. Manufacturing method for electrode material

The manufacturing method for the electrode material of the present disclosure includes a doping process. In the doping process, the mixed solution including at least the active material is kneaded, stirred, or mixed in the presence of the alkali metal supplying source.

When referring to in the presence of the alkali metal supplying source in the present embodiment, this means a state in which the alkali metal supplying source and the mixed solution are brought into contact. The mixed solution to be stirred, stirred, or mixed may or may not include the alkali metal supplying source therein.

In the doping process, for example, the mixed solution can be accommodated in the container, and the alkali metal supplier including the alkali metal supplying source can be arranged in the container. The alkali metal supplier includes, for example, the alkali metal supplying source and a holding member holding the same. The holding member includes, for example, a separator, a metal mesh, and the like to be described later. The alkali metal supplier is a unit capable of supplying the alkali metal originating from the alkali metal supplying source to the mixed solution.

The alkali metal supplier can include, for example, the separator that separates the alkali metal supplying source and the active material. The separator will be described later. The alkali metal supplier can include, for example, a conductive portion. When the conductive portion is included, for example, the active material and the conductive material, to be described later, and the alkali metal supplier can be electrically connected. The conductive portion includes, for example, a layer made from a conductive material formed in at least one part of the surface of the alkali metal supplier. The conductive material includes, for example, metal, and the like.

An alkali metal in the alkali metal supplying source includes, for example, lithium, sodium, and the like. The form of alkali metal supplying source is not particularly limited, and for example, may be the form described in the first embodiment.

When the alkali metal supplying source in a foil state is used, the thickness thereof is preferably within a range of 10 to 500 µm, and when the alkali metal supplying source in a particle state is used, the average particle diameter thereof is preferably within a range of 10 to 500 µm.

A known method can be appropriately selected and used for the kneading, stirring, or mixing of the mixed solution. For example, the mixed solution accommodated in the container can be kneaded, stirred, or mixed using the dynamic pressurizer. The dynamic pressurizer can be appropriately selected from a known unit, and for example, a kneading and mixing machine, a stirring blade, and the like can be used. Furthermore, the mixed solution can be stirred using the manufacturing device for the electrode material to be described later.

In the doping process, for example, the mixed solution and the conductive material can coexist. The high-quality electrode material can be efficiently manufactured by using the conductive material. The material of the conductive material may be, for example, metal such as stainless steel, nickel, aluminum, iron, copper, tin cobalt iron and the like, and the material coated with such metal. As the conductive material is used in the stirring process, the material of the conductive material preferably has high hardness and density, and stainless steel is particularly suitably used. A method for coating the metal in the material coated with the metal includes, for example, a method of vapor deposition and plating.

The shape of the conductive material is not particularly limited, and is preferably a spherical shape or a rod shape. When the shape is spherical, this excels in the easiness in stirring in the stirring process, and the durability of the conductive material. An area equivalent circle diameter of the spherical conductive material is preferably greater than or equal to 0.01 mm and smaller than or equal to 10 mm. When the area equivalent circle diameter of the conductive material is within such range, this excels in ensuring conduction between the active materials and pressurizing the active material to promote the doping of the alkali metal. The area equivalent circle diameter of the spherical conductive material can be measured by analyzing the image observed using a microscope.

When the shape of the conductive material is a rod shape, this excels in the easiness in stirring in the stirring process and the separation with the active material after the stirring. An area equivalent circle diameter of the rod-shaped conductive material is preferably greater than or equal to 0.01 mm and smaller than or equal to 10 mm. Furthermore, a length of the rod-shaped conductive material is preferably greater than or equal to 10 mm and smaller than or equal to 1,000 mm.

The lower limit of the amount of conductive material is preferably greater than or equal to 10 pts. mass, more preferably greater than or equal to 100 pts. mass, and still more preferably greater than or equal to 500 pts. mass with respect to 100 pts. mass of the active material. The upper limit of the amount of conductive material is preferably smaller than or equal to 100,000 pts. mass, more preferably smaller than or equal to 50,000 pts. mass, and still more preferably smaller than or equal to 10,000 pts. mass with respect to 100 pts. mass of the active material. When the amount of conductive material is within such range, the doping of the alkali metal can be promoted.

In the stirring process, the alkali metal is doped in the active material. In the stirring process, a state in which the alkali metal supplying source and the active material are separated is obtained. The separated state means that the alkali metal supplying source and the active material are not brought into direct contact. A mode of the separated state includes, for example, a mode in which the alkali metal supplying source and the active material are separated by way of the separator.

The separator, for example, transmits the solvent and the alkali metal ion included in the mixed solution but is less likely to transmit the alkali metal supplying source and the active material. The material of the separator is not particularly limited, but is preferably a polyolefin material such as polyethylene, polypropylene, and the like. The film thickness of the separator is preferably in a range of 1 µm to 1 mm, and is more preferably in a range of 5 µm to 500 µm. When the film thickness of the separator is within such range, this excels in the separation of the alkali metal supplying source and the active material, and in the doping speed of the alkali metal to the active material. Furthermore, an average hole diameter of the pore of the separator is preferably smaller than or equal to 1 µm, and more preferably 0.01 µm to 0.5 µm from the standpoint of separating the alkali metal supplying source and the active material. The active material and the like can be suppressed from clogging the pore of the separator by using the separator having the average pore diameter of such range. A void ratio of the separator is preferably 20 to 80 % by volume and more preferably 30 to 75 % by volume. The alkali metal is less likely to remain in the active material in the shape of a powder, and the like, and the doping of the alkali metal supplying source can be efficiently promoted by using the separator having the void ratio of such range.

As the alkali metal supplying source and the active material are in a separated state in the stirring process, the alkali metal can be suppressed from remaining in the shape of powder and the like in the active material after the stirring process. Furthermore, as the alkali metal supplying source and the active material are in a separated state in the stirring process, the resistance of the active material included in the manufactured electrode material becomes small. The reason the resistance of the active material is small can be assumed as because a satisfactory SEI coated film is formed on the active material. Moreover, although the alkali metal supplying source and the active material are in a separated state, the doping of the alkali metal can be promoted by carrying out stirring.

### 2. Manufacturing device for electrode material

The manufacturing device for the electrode material of the present disclosure includes (A) a container that accommodates the mixed solution including at least the active material and the alkali metal supplying source while separating through the separator, and (B) a dynamic pressurizer that kneads, stirs, or mixes the mixed solution.

The manufacturing device for the electrode material of the present disclosure includes, for example, the alkali metal supplier including the alkali metal supplying source in the container. The alkali metal supplier is as described in the section "Manufacturing method for electrode material" in the present embodiment.

The alkali metal supplier includes, for example, the separator that separates the alkali metal supplying source and the active material. The separator is as described in the section "Manufacturing method for electrode material" in the present embodiment. The alkali metal supplier can include, for example, a conductive portion. The conductive portion is as described in the section "Manufacturing method for electrode material" in the present embodiment.

The container is not particularly limited as long as it accommodates the mixed solution and the alkali metal supplying source. The dynamic pressurizer is as described in the section "Manufacturing method for electrode material".

The manufacturing device for the electrode material of the present disclosure may further include, for example, a unit for depressurizing or pressurizing the inside of the container, a temperature controller that controls the temperature in the container, and the like.

### 2.1 Embodiment A of manufacturing device for electrode material

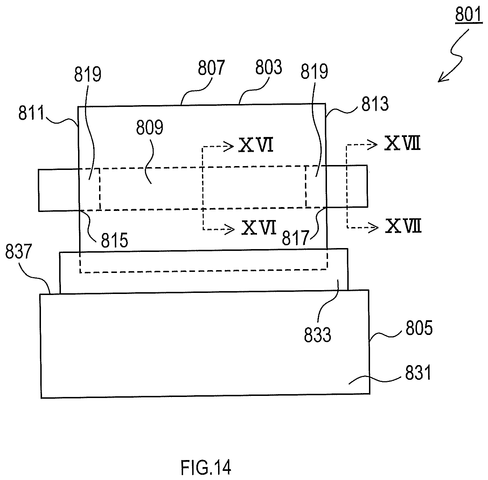

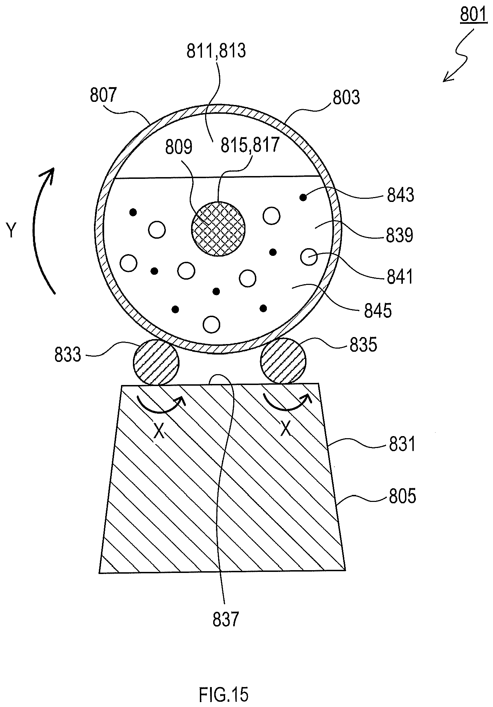

Embodiment A of the manufacturing device for the electrode material will be described based on Figs. 14 to 17. As shown in Figs. 14 and 15, a manufacturing device 801 includes a container part 803 and a stirrer 805. The container part 803 includes a container 807, and an alkali metal supplier 809.

The container 807 is a hollow cylindrical container. The plastic material such as polypropylene and polyethylene, and the metal material such as stainless steel can be used for the material of the container 807. The volume of the container 807 is usually 100 cc to 100,000 cc, and the diameter of the container 807 is usually 10 mm to 1 m. Circular holes 815, 817 are formed at the center of end faces 811, 813, respectively, in the axial direction of the container 807.

The alkali metal supplier 809 has a rod shape. The alkali metal supplier 809 is assembled to the container 807 so as to pass through the holes 815, 817. As a result, the container 807 accommodates the portion excluding both ends of the alkali metal supplier 809.

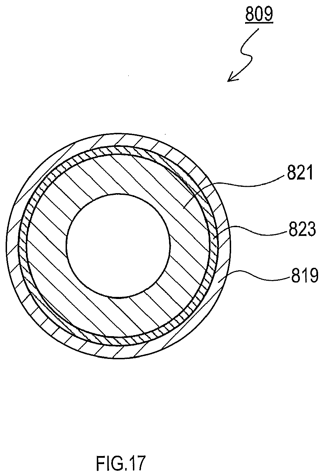

As shown in Fig. 17, the alkali metal supplier 809 has a structure in which the conductive layer 823 is stacked on the outer peripheral surface of the base material 821 of the alkali metal supplier 809 and a supporting portion 819 is arranged thereon in the vicinity of both ends. Part of the supporting portion 819 is inside the container 807. The supporting portion 819 is fixed to the container 807. The supporting portion 819 and the conductive layer 823 correspond to the conductive portion.

The material of the base material 821 is not particularly limited, but metal such as stainless steel, nickel, aluminum, iron, copper, tin cobalt iron, and the like is suitably used, and stainless steel is particularly suitably used as it excels in strength.

The material of the conductive layer 823 is not particularly limited, but metal such as stainless steel, nickel, aluminum, iron, copper, tin cobalt iron, and the like is suitably used, and copper is particularly suitably used as it excels in conductivity. The film thickness of the conductive layer 823 is usually in a range of 1 µm to 1 mm.

The material of the supporting portion 819 is not particularly limited, but metal such as stainless steel, nickel, aluminum, iron, copper, tin cobalt iron, and the like is suitably used, and stainless steel is particularly suitably used as it excels in strength.

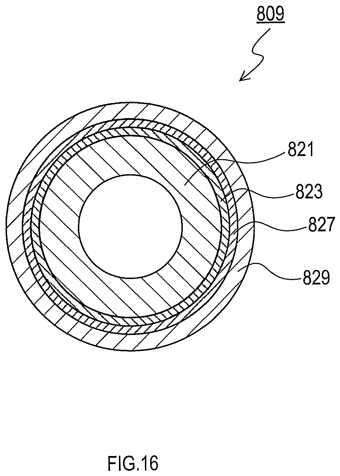

As shown in Fig. 16, the portion other than both ends in the alkali metal supplier 809 has a structure in which the conductive layer 823 is stacked on the outer peripheral surface of the base material 821, the alkali metal supplying source layer 827 is stacked thereon, and the separator 829 is stacked thereon.

The base material 821 and the conductive layer 823 are similar to the base material 821 and the conductive layer 823 at both ends of the alkali metal supplier 809. The film thickness of the alkali metal supplying source layer 827 is usually in a range of 1 µm to 1 mm. The material of the separator 829 is polyolefin material such as polyethylene, polypropylene, and the like, and the film thickness is usually in a range of 1 µm to 1 mm.

As shown in Figs. 14 and 15, the stirrer 805 includes a base portion 831 and a pair of rotation shafts 833, 835. The diameters of the rotation shafts 833, 835 are usually 5 mm to 500 mm. The pair of rotation shafts 833, 835 is attached on a top plate 837 of the base portion 831. The axial directions of the pair of rotation shafts 833, 835 are horizontal, and are parallel to each other. A predetermined gap is formed between the rotation shaft 833 and the rotation shaft 835. The pair of rotation shafts 833, 835 is rotatably driven in the X direction shown in Fig. 15.

As shown in Figs. 14 and 15, the container part 803 is mounted on the rotation shafts 833, 835 with the axial direction of the container part 803 parallel to the rotation shafts 833, 835. When the rotation shafts 833, 835 rotate in the X direction, the container part 803 is rotated in the Y direction shown in Fig. 15.

When the manufacturing device 801 is used, the container part 803 is rotated in the Y direction and the mixed solution 839 including the active material 843 and the electrolytic solution 845 and the conductive material 841 are stirred by the stirrer 805. The form of the conductive material 841 is spherical. The rotation speed of the container part 803 is 100 rpm. This process corresponds to the stirring process. In the stirring process, the lithium supplied from the alkali metal supplier 809 is doped in the active material 843.

### 2.2 Embodiment B of manufacturing device for electrode material

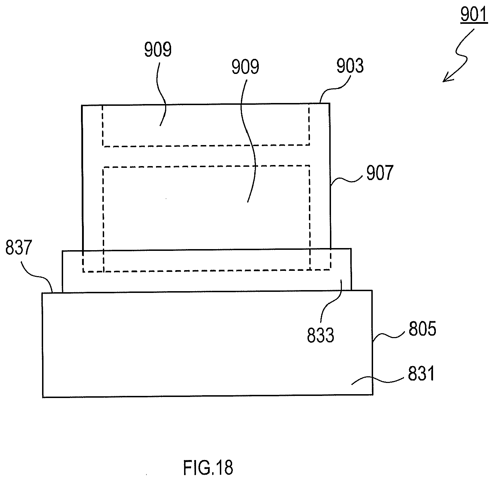

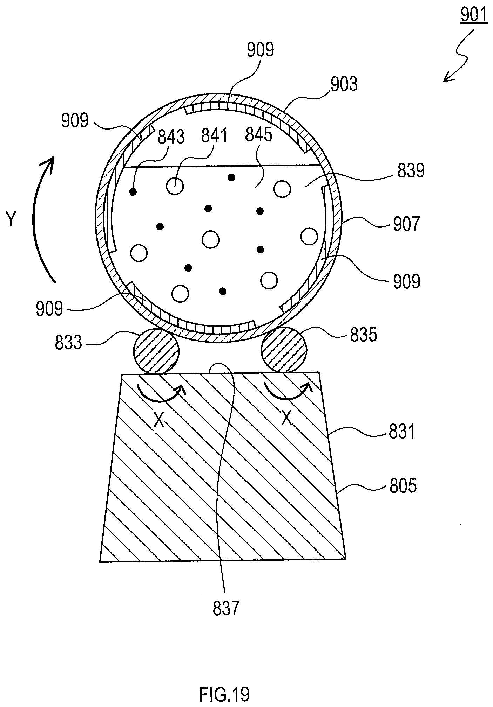

Embodiment B of the manufacturing device for the electrode material will be described based on Figs. 18 to 20. As shown in Figs. 18 and 19, a manufacturing device 901 includes a container part 903 and a stirrer 805. The container part 903 includes a container 907, and an alkali metal supplier 909.

The container 907 is a hollow cylindrical container. The plastic material such as polypropylene and polyethylene, and the metal material such as stainless steel can be used for the material of the container 907. The volume of the container 907 is usually 100 cc to 100,000 cc, and the diameter of the container 907 is usually 10 mm to 1 m.

The alkali metal supplier 909 has a sheet shape. Four alkali metal suppliers 909 are attached to the inner surface of the container 907. As a result, the container 907 accommodates four alkali metal suppliers 909.

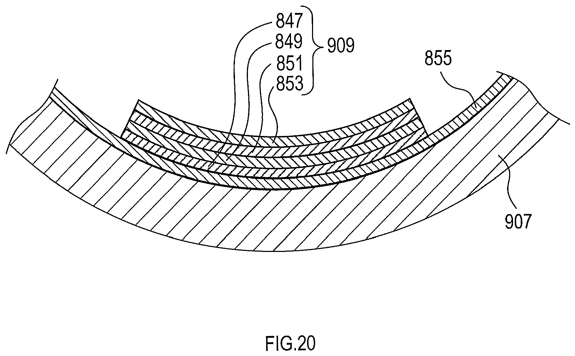

As shown in Fig. 20, the alkali metal supplier 909 has a structure in which the conductive layer 847, the alkali metal supplying source layer 849, the separator 851, and the mesh layer 853 are sequentially stacked. The alkali metal supplying source layer 849 corresponds to the alkali metal supplying source. The total amount of Li included in the alkali metal supplier 909 can be appropriately set according to the amount of Li amount to dope and the amount of active material, and is usually an amount corresponding to 5mAh to 5000 mAh with respect to 1 g of active material.

The film thickness of the conductive layer 847 is usually in a range of 1 µm to 1 mm. The material of the separator 851 is polyolefin material such as polyethylene, polypropylene, and the like, and the film thickness is usually in a range of 1 µm to 1 mm. The material of the mesh layer 853 is stainless steel. A mesh layer 855 made of stainless steel is arranged between the alkali metal supplier 909 and the container 907.

The configuration of the stirrer 805 is similar to those of embodiment A described above. As shown in Figs. 18 and 19, the container part 903 is mounted on the rotation shafts 833, 835 with the axial direction of the container part parallel to the rotation shafts 833, 835. When the rotation shafts 833, 835 rotate in the X direction, the container part 903 rotates in the Y direction shown in Fig. 19.

### 2.3 Embodiment C of manufacturing device for electrode material

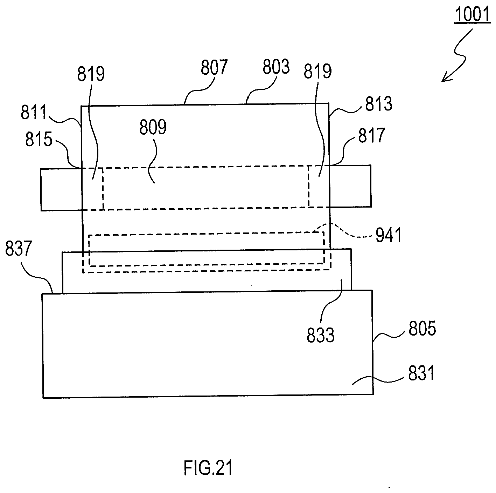

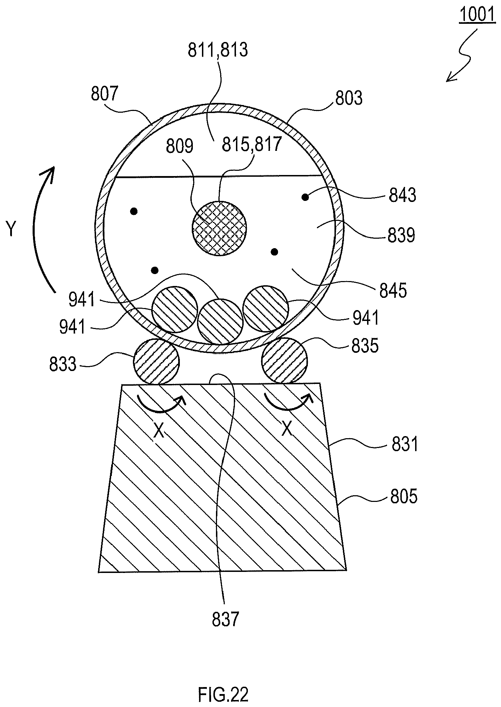

Embodiment C of the manufacturing device for the electrode material will be described based on Figs. 21 and 22. A manufacturing device 1001 of the present embodiment is similar to the manufacturing device 801 described above other than that the form of the conductive material 941 is a rod shape. The conductive material 941 is entirely accommodated in the container 807. A plurality of conductive materials 941 are accommodated in the container 807. The axial direction of the conductive material 941 is parallel to the axial direction of the container 807. The conductive material 941 is movable inside the container 807.

When the manufacturing device 1001 is used, the container part 803 is rotated in the Y direction and the mixed solution 839 including the active material 843 and the electrolytic solution 845 and the conductive material 941 are stirred by the stirrer 805. When the container part 803 rotates, the conductive material 941 is rolled in the inside of the container 807. The rotation speed of the container part 803 is 100 rpm. This process corresponds to the stirring process. In the stirring process, the lithium supplied from the alkali metal supplier 809 is doped in the active material 843.

### 3. Example

Hereinafter, the embodiment of the present disclosure will be described more specifically using examples. However, the present disclosure is not limited to the following examples.

### (Example 5A)

The electrode material was manufactured in the following manner using the manufacturing device 801. As shown in Fig. 15, the mixed solution 839 and the conductive material 841 are accommodated in the container 807. The inner diameter of the container 807 is 102 mm, and the volume is 1,000 ml. The material of the container 807 is polypropylene. The base material 821 of the alkali metal supplier 809 is a cylindrical member having a diameter of 61 mm made of stainless steel.

A copper foil (length 200 mm, width 150 mm, film thickness 20 µm) was used for the conductive layer 823, and a lithium foil (length 120 mm, width 100 mm) having a film thickness 200 µm was used for the alkali metal supplying source layer 827. A film made of polypropylene having a length 200 mm, a width 150 mm, and a film thickness 20 µm was used for the separator 829.

The mixed solution 839 includes the active material 843 and the electrolytic solution 845. The active material 843 is hard carbon. The amount of active material 843 included in the mixed solution 839 is 60 g. The electrolytic solution 845 is a solution including LiPF6 of concentration 1M, and the solvent. The solvent includes ethylene carbonate and propylene carbonate such that a volume ratio is 5:5. The proportion of the solid content (active material 843) in the mixed solution 839 is 30 % by mass.

The conductive material 841 is a spherical particle made of stainless steel having a diameter of 3 mm. The added amount of the conductive material 841 is 2000 g. The alkali metal supplier 809 is immersed in the mixed solution 839. The alkali metal supplying source layer 827 and the active material 843 included in the mixed solution 839 are in a separated state by the separator 829. The conductive material 841 contacts the supporting portion 819.

Furthermore, when the hard carbon separated from the mixed solution was observed using an optical microscope at a magnification of 500 times, remaining lithium metal piece was not to be observed. Then, the OCV of the hard carbon separated from the mixed solution was measured. The measuring method is as described below. First, two perforated copper foils of 16 mmϕ were prepared through the punching method. Next, the two perforated copper foils were overlapped, and ultrasonically welded excluding an opening of one area in the outer peripheral portion to manufacture a bag.

Hard carbon of 30 mg was added to such bag, and the opening of the bag was ultrasonically welded to form an evaluation electrode. A tripolar cell having the evaluation electrode as an working electrode and the lithium metal as a counter electrode and a reference electrode was assembled. The electrolytic solution of the same composition as the electrolytic solution described above was injected to the tripolar cell. The potential (OCV) of the working electrode with respect to the lithium metal immediately after the injection was then measured.

The value of OCV at the time point of the doping time of 81 hours in the hard carbon obtained in example 5A was 0.74V. The value of OCV becomes smaller as the doping of lithium advances. Furthermore, when the obtained hard carbon observed using the optical microscope at a magnification of 500 times, remaining lithium metal piece was not found.

### (Example 5B)

The electrode material was manufactured in the following manner using the manufacturing device 901. As shown in Fig. 19, the mixed solution 839 and the conductive material 841 are accommodated in the container 907. The material of the container 907 is polypropylene and the volume is 1,000 ml. The inner diameter of the container 907 is 102 mm. The mixed solution 839 and the conductive material 841 are similar to those of example 4A described above. Furthermore, the size of the alkali metal supplying source layer 849 included in one alkali metal supplier 909 is length 100 mm × width 30 mm × film thickness 200 µm.

Each of the conductive layer 847, the separator 851, and the mesh 853 included in one alkali metal supplier 909 is as follows. The conductive layer 847 is a copper foil (length 120 mm, width 50 mm, film thickness 20 µm), the separator 851 is a film made of polypropylene having length 130 mm, width 60 mm, film thickness 20 µm, and the mesh 853 is a mesh made of stainless steel having length 140 mm, width 70 mm, and 200 meshes. Furthermore, the mesh 855 is a mesh made of stainless steel having length 140 mm and 200 meshes.

At least one part of the alkali metal supplier 909 was immersed in the mixed solution 839. In the alkali metal supplier 909 immersed in the mixed solution 839, the alkali metal supplying source layer 849 and the active material 843 included in the mixed solution 839 were in a separated state by the separator 851.

Next, the container part 903 was rotated in the Y direction and the mixed solution 839 was stirred by the stirrer 805. The rotation speed of the container part 903 is 100 rpm. This process corresponds to the stirring process. In the stirring process, the lithium supplied from the alkali metal supplier 909 was doped in the active material 843.

In the present example as well, the presence/absence of the remaining lithium metal piece as well as the OCV were measured in the hard carbon doped with lithium, as with example 5A. In the hard carbon obtained with the doping time of 43 hours, the remaining lithium metal piece was not found and the value of OCV was 0.69V

## Claims

1. A manufacturing method for an electrode material, the manufacturing method comprising, in a presence of an alkali metal supplying source and a solvent, dynamically pressurizing an amorphous aggregate including at least an active material in a dynamic pressurizer, sending out in a sending direction and continuously discharging the aggregate in the sending direction from the dynamic pressurizer.

2. The manufacturing method for the electrode material according to claim 1, wherein
the aggregate is kneaded, stirred or mixed in the dynamic pressurizer, and the aggregate is pushed out from the pressurizer.

3. The manufacturing method for the electrode material according to claim 1 or 2, wherein
the aggregate is kneaded, stirred or mixed under in the presence of the alkali metal supplying source and the solvent before the pressurization.

4. A manufacturing method for an electrode material including an active material doped with an alkali metal,
the manufacturing method comprising:
a separating process of separating the active material and an alkali metal supplying source in a mixed solution including the active material doped with the alkali metal and the alkali metal supplying source.

5. The manufacturing method for the electrode material according to claim 4, further comprising:
a removing process of removing at least one of the active material and the alkali metal supplying source separated by the separating process from the mixed solution.

6. The manufacturing method for the electrode material according to claim 5, wherein
in the removing process, the alkali metal supplying source is removed from the mixed solution.

7. The manufacturing method for the electrode material according to any one of claims 4 to 6, further comprising:
a stirring process of stirring the mixed solution before the separating process.

8. The manufacturing method for the electrode material according to any one of claims 4 to 7, further comprising:
a diluted solution adding process of adding a diluted solution to the mixed solution before the separating process.

9. The manufacturing method for the electrode material according to any one of claims 4 to 8, wherein
the mixed solution is still stood or fine stirred in at least one part of the separating process.

10. A manufacturing method for an electrode material, the manufacturing method comprising: a doping process of kneading, stirring, or mixing an electrode material precursor including at least an active material in a container in a presence of an alkali metal supplying source, a conductive bead, and a solvent.

11. The manufacturing method for the electrode material according to claim 10, wherein
the electrode material precursor is an amorphous aggregate.

12. The manufacturing method for the electrode material according to claim 10 or 11, wherein
the conductive bead has a spherical shape.

13. The manufacturing method for the electrode material according to any one of claims 10 to 12, wherein
an area equivalent circle diameter of the conductive bead is greater than or equal to 0.01 mm and smaller than or equal to 10 mm.

14. The manufacturing method for the electrode material according to any one of claims 10 to 13, wherein
an amount of conductive bead is greater than or equal to 10 pts. mass and smaller than or equal to 10,000 pts. mass with respect to 100 pts. mass of the electrode material precursor.

15. The manufacturing method for the electrode material according to any one of claims 10 to 14, wherein
the alkali metal supplying source is coated by a coating material.

16. The manufacturing method for the electrode material according to any one of claims 10 to 15, wherein
the alkali metal supplying source is fixed to the container.

17. The manufacturing method for the electrode material according to any one of claims 10 to 16, further comprising:
a discharging process of continuously discharging the electrode material precursor subjected to the kneading process.

18. A manufacturing method for an electrode material, the manufacturing method comprising:
a doping process of kneading, stirring, or mixing a mixed solution including at least an active material in a presence of an alkali metal supplying source,
wherein in the doping process, the alkali metal supplying source and the active material are in a separated state.

19. The manufacturing method for the electrode material according to claim 18, wherein
in the stirring process, the alkali metal supplying source and the active material are in a separated state through a separator.

20. A manufacturing method for an electrode material, the manufacturing method comprising:
a depressurizing process of placing a mixed solution including at least an active material in a depressurized state; and
a doping process of doping an alkali metal to the active material.

21. The manufacturing method for the electrode material according to claim 20, wherein
at least one part of the doping process is carried out with the depressurizing process.

22. The manufacturing method for the electrode material according to claim 20, wherein
the depressurizing process is carried out before the doping process.

23. The manufacturing method for the electrode material according to any one of claims 20 to 22, wherein
the mixed solution is kneaded, stirred, or mixed in the doping process.

24. The manufacturing method for the electrode material according to any one of claims 20 to 23, wherein
a pressure in the depressurized state is within a range of 0.01 kPa to 0.05 MPa.

25. The manufacturing method for the electrode material according to any one of claims 20 to 24, wherein
the mixed solution is prepared before the depressurizing process.

26. The manufacturing method for the electrode material according to any one of claims 1 to 25, wherein
the active material is a negative electrode active material.

27. A manufacturing method for an electrode of manufacturing the electrode material through the manufacturing method for the electrode material according to any one of claims 1 to 26, and manufacturing an electrode using the electrode material.

28. A manufacturing method for a capacitor comprising a positive electrode, a negative electrode, and an electrolyte, wherein
the negative electrode is manufactured through the manufacturing method for the electrode according to claim 27.

29. A manufacturing method for a battery comprising a positive electrode, a negative electrode, and an electrolyte, wherein
the negative electrode is manufactured through the manufacturing method for the electrode according to claim 28.

30. A manufacturing device for an electrode material, the manufacturing device comprising:
(A) a dynamic pressurizer; and
(B) a discharger,
wherein:
the dynamic pressurizer is configured to accommodate, dynamically pressurize, and send out in a sending direction toward the discharger an alkali metal supplying source, a solvent and an amorphous aggregate including at least an active material; and
the discharger is configured to continuously discharge the aggregate in the sending direction from the pressurizer.

31. A manufacturing device for an electrode material, the manufacturing device comprising:
an accommodation container that accommodates a mixed solution including an active material and an alkali metal supplying source; and
a remover that removes either the active material or the alkali metal supplying source from the mixed solution.

32. The manufacturing device for the electrode material according to claim 31, wherein
the remover suctions either the active material or the alkali metal supplying source.

33. A manufacturing device for an electrode material, the manufacturing device comprising:
(A) a container that accommodates an electrode material precursor including at least an active material, an alkali metal supplying source, a solvent, and a conductive bead; and
(B) a dynamic pressurizer that kneads, stirs, or mixes the electrode material precursor.

34. A manufacturing device for an electrode material, the manufacturing device comprising:
(A) a container that accommodates a mixed solution including at least an active material and an alkali metal supplying source while separating through the separator; and
(B) a dynamic pressurizer that kneads, stirs, or mixes the mixed solution.

35. The manufacturing device for the electrode material according to claim 34, wherein
the alkali metal supplier includes a conductive portion.

36. A manufacturing device for an electrode material, the manufacturing device comprising:
(A) a container that accommodates a mixed solution including at least an active material and an alkali metal supplying source; and
(B) a depressurizing part that depressurizes an inside of the container.
